# EUROPEAN PATENT APPLICATION

(11) **EP 3 193 393 A1**
(43) Date of publication of application: **19.07.2017**
(21) Application number: 15840885.6
(22) Date of filing: 04.09.2015
(51) Int. Cl.: H01M 4/13, H01M 4/131, H01M 4/136, H01M 4/36, H01M 4/505, H01M 4/525, H01M 4/58, H01M 4/80

(54) **POSITIVE ELECTRODE FOR LITHIUM-ION SECONDARY CELL, AND LITHIUM-ION SECONDARY CELL**

(30) Priority: 10.09.2014 JP 2014184151
(71) Applicant: Mitsubishi Materials Corporation, Chiyoda-ku Tokyo 100-8117 (JP)
(72) Inventor: AKIKUSA Jun, Naka-shi Ibaraki 311-0102 (JP); SHIMIZU Sho, Naka-shi Ibaraki 311-0102 (JP); YANAGI Shigenari, Naka-shi Ibaraki 311-0102 (JP); ISOBE Takeshi, Kitamoto-shi Saitama 364-0023 (JP); WADA Masahiro, Kitamoto-shi Saitama 364-0023 (JP)
(74) Representative: Gille Hrabal
(86) International application number: PCT/JP2015/075190
(87) International publication number: WO 2016/039263

(57) **Abstract**

A cathode for lithium ion secondary battery of the present invention includes a cathode including a current collector (5) and active material supported on the current collector (5). The current collector (5) is made of porous metal. The cathode (2) has holes (6) in its surface, and active material density is 50 to 80% of true density of the active material. Because the cathode (2) is thick and supported with the active material densely and the holes (6) are formed in its surface, transfer of an electron and insertion/release of lithium ion take place in the cathode surface and deep in the cathode (2) in the lithium ion secondary battery. Therefore, the lithium ion released from the active material can migrate in the electrolyte solution in the holes, so that the active material present deep in the cathode (2) is effectively utilized, and thus, the lithium ion secondary battery has high capacity and can promptly charge/discharge.

## Description

### [Technical Field]

The present invention relates to a cathode for a lithium ion secondary battery and a lithium ion secondary battery.

### [Background Arts]

A lithium ion secondary battery is drawing an attention as a secondary battery having a high capacity. In order to enhance performance of the lithium ion secondary battery, many developments have been made (see, Patent Documents 1 to 6, etc.).

Patent Document 1 discloses an active material layer with the thickness of 5 to 100 µm, including voids and pillar-shaped particles, which have a zig-zag shape, and are supported on the projection portion on a surface of an electrode. In Patent Document 1, it is disclosed that a cell reaction can be facilitated when an anode of a lithium ion secondary battery has the active material layer.

Patent Document 2 discloses an electrode for a lithium ion secondary battery including a current collector made of a metal foil and an active material layer. The active material layer is produced by applying a mixed cathode material, which is a mixture of an active material, a conductive material, and a binding agent, onto a surface of the current collector with the application amount per one surface of 15 mg/cm² with the mixed cathode material density of 2.5 g/cm³. The electrode for a lithium ion secondary battery disclosed in Patent Document 2 has small holes and/or slits that penetrate through the current collector and the active material layer. In Patent Document 2, it is disclosed that through the small holes and the like formed in the electrode for a lithium ion secondary battery, the gases accumulated in the active material layer and the like of the electrode sheet are discharged to outside the electrode body so that the safety of the lithium ion secondary battery is improved.

Patent Document 3 discloses an electrode for a lithium ion secondary battery which includes a current collector in the form of a sheet, formed from unwoven cloth of metal fibers, and an active material layer supported on a current collector, and has penetrating holes which are formed by a punching method and penetrate through the current collector and the active material layer in the thickness direction of the electrode. In Patent Document 3, it is disclosed that when this electrode for a lithium ion secondary battery is used, an electrolyte solution is impregnated into the electrode so well that an ionic conductivity is enhanced thereby leading to enhancement of cell characteristics such as load characteristic of the lithium ion secondary battery.

Patent Document 4 discloses an electrode for a lithium ion secondary battery including a current collector in the form of a sheet and an active material layer formed by applying a cathode slurry on both surfaces of the current collector followed by drying thereof. A concave-convex structure having a height difference of 5 to 100 µm is formed on a surface of at least one of the active material layer. In Patent Document 4, it is disclosed that when this electrode for a lithium ion secondary battery is used, amount of the electrolyte solution in the electrode is increased thereby facilitating a cell reaction, so that an output of the lithium ion secondary battery is enhanced.

Patent Document 5 discloses an active material layer. A first mixed material layer region having a low void ratio and a second mixed material layer region having a high void ratio are formed alternately on a surface of an electrode thereby having different void ratios according to the position in the direction along the electrode surface. In Patent Document 5, it is disclosed that because an lithium ion migrates in the second mixed material layer region having a high void ratio, a migration resistance of the lithium ion is decreased. Hence, when the electrode formed with the active material layer is used, an internal resistance of the battery is decreased, so that an input/output characteristic of the lithium ion secondary battery is enhanced.

Patent Document 6 discloses an electrode for a lithium ion secondary battery. An application thickness of an active material is 80 µm or less. A void ratio on the current collector side of the active material layer is 30 to 50%, and a void ratio on the separator side thereof is 50 to 60%. In Patent Document 6, it is disclosed that when this electrode for a lithium ion secondary battery is used, amount of an electrolyte solution in the electrode is increased thereby leading to an increase in a transportation capacity of a lithium ion in the thickness direction in the electrolyte solution inside the electrode, so that an output density is enhanced furthermore.

### [Citation List]

### [Patent Documents]

Patent Document 1: Japanese Patent Laid-Open Publication No. 2008-181835 (paragraphs [0013] and [0033])
Patent Document 2: Japanese Patent Laid-Open Publication No. 2001-6749 (paragraphs [0010], [0023], [0026], and [0057])
Patent Document 3: Japanese Patent Laid-Open Publication No. 2012-195182 (paragraphs [0008], [0013], and [0019])
Patent Document 4: Japanese Patent Laid-Open Publication No. 2008-10253 (paragraphs [0008], [0009], and [0023])
Patent Document 5: Japanese Patent Laid-Open Publication No. 2013-8523 (paragraph [0010])
Patent Document 6: Japanese Patent Laid-Open Publication No. 2002-151055 (claims 1 to 5)

### [Summary of the Invention]

### [Problems to be Solved by the Invention]

However, in the active material layer disclosed in Patent Document 1, when the thickness of the active material layer becomes more than 100 µm, not only formation of the active material layer is difficult but also the active material layer is readily broken. Hence, an amount of the active material possessed by the electrode cannot be increased by further increasing the thickness of the active material layer. Accordingly, in the lithium ion secondary battery using the electrode having this active material layer, it is difficult to increase the capacity.

In the electrode for a lithium ion secondary battery disclosed in Patent Document 2, penetrating holes are formed in the current collector thereby readily leading, in the manufacturing process of the electrode, to breakage of the metal foil that constitutes the current collector, so that the yield of the manufactured electrode tends to decrease. In addition, an internal resistance of the current collector is high. Accordingly, the lithium ion secondary battery using this electrode has a high internal resistance and is slow in the cell reaction, so that the rates of charging and discharging are slow.

In the electrode for a lithium ion secondary battery disclosed in Patent Document 3, the current collector is formed from unwoven cloth of metal fibers, and hence, electric conductivity of the current collector is low. Accordingly, in the lithium ion secondary battery using this electrode, due to a high internal resistance, the output characteristic may not be sufficiently high. In addition, in the lithium ion secondary battery using this electrode, because penetrating holes are formed by a punching method in the current collector and the active material layer, an amount of the active material that is supported on the electrode is decreased by the amount that is punched out, thereby leading to a decrease in the cell capacity.

In the electrode for a lithium ion secondary battery disclosed in Patent Document 4, when the height difference of the concave-convex structure is more than 100 µm, the active material layer is easily damaged. Hence the height difference of the concave-convex structure cannot be increased even when the thickness of the active material is further increased to increase the amount of the active material possessed by the electrode. Accordingly, the amount of the active material which the electrolyte solution cannot reach increases. Thus, it is difficult to increase the capacity of the lithium ion secondary battery using the electrode.

In the active material layer disclosed in Patent Document 5, the second mixed material layer region having a high void ratio, in which the lithium ion preferentially migrates, is formed in the form of a slit. In this active material layer, because an active material density in the second mixed material layer region is low, there occurs a problem that the average active material density of the entire active material layer decreases. Therefore, in the lithium ion secondary battery using the active material layer, the energy density (charge/discharge capacity) per volume cannot be enhanced.

In the electrode for a lithium ion secondary battery disclosed in Patent Document 6, the thickness of the active material layer is 20 to 80 µm and the void ratio on the separator side is in the range of not less than 50 % to not more than 60%, so that the active material density is low. Therefore, in the lithium ion secondary battery using the electrode, there is a problem that the energy density (charge/discharge capacity) per volume is low.

In view of the foregoing, an object of the present invention is to provide a cathode for a lithium ion secondary battery having a high capacity and enabling fast charging and discharging, and a lithium ion secondary battery.

### [Means for Solving the Problems]

According to a first aspect of the present invention, a cathode includes a current collector and an active material supported on the current collector. The current collector is made of a porous metal. The cathode has a plurality of holes on its surface. An active material density is 50 to 80% relative to a true density of the active material.

According to a second aspect of the present invention, the invention is on the basis of the first aspect, and the cathode has the thickness of 100 to 3000 µm.

According to a third aspect of the present invention, the invention is on the basis of the first aspect or the second aspect, the cathode includes 69.0 to 98.9% by weight of LiCoO₂ as the active material and 1.0 to 25.0% by weight of the porous metal. The active material density is 2.53 to 4.04 g/cm³.

According to a fourth aspect of the present invention, the invention is on the basis of the first aspect or the second aspect, the cathode includes 69.0 to 98.9% by weight of Li(NiₓMn_{y}Co_{z})O₂ (however, 0<x<1.0, 0<y<1.0, 0<z<1.0, and x+y+z=1.0) as the active material and 1.0 to 25.0% by weight of the porous metal, and the active material density is 2.30 to 3.68 g/cm³.

According to a fifth aspect of the present invention, the invention is on the basis of the first aspect or the second aspect, the cathode includes 69.0 to 98.9% by weight of LiMn₂O₄ as the active material and 1.0 to 25.0% by weight of the porous metal; and the active material density is 2.10 to 3.36 g/cm³.

According to a sixth aspect of the present invention, the invention is on the basis of the first aspect or the second aspect, the cathode includes 69.0 to 98.9% by weight of LiNiO₂ as the active material and 1.0 to 25.0% by weight of the porous metal, and the active material density is 2.40 to 3.84 g/cm³.

According to a seventh aspect of the present invention, the invention is on the basis of the first aspect or the second aspect, the cathode includes 69.0 to 98.9% by weight of LiNi_{0.8}Co_{0.15}Al_{0.05}O₂ as the active material and 1.0 to 25.0% by weight of the porous metal, and the active material density is 2.45 to 3.92 g/cm³.

According to an eighth aspect of the present invention, the invention is on the basis of the first aspect or the second aspect, the cathode includes 69.0 to 98.9% by weight of LiFePO₄ as the active material and 1.0 to 25.0% by weight of the porous metal, and the active material density is 1.75 to 2.80 g/cm³.

According to a ninth aspect of the present invention, the invention is on the basis of the first aspect or the second aspect, the cathode includes 69.0 to 98.9% by weight of two or more selected from LiCoO₂, Li(NiₓMn_{y}Co_{z})O₂ (provided that 0<x<1.0, 0<y<1.0, 0<z<1.0, and x+y+z=1.0), LiMn₂O₄, LiNiO₂, LiNi_{0,8}Co_{0.15}Al_{0.05}O₂, and LiFePO₄ as the active material and 1.0 to 25.0% by weight of the porous metal, and the active material density is in a range of more than 1.75 to less than 4.04 g/cm³.

According to a tenth aspect of the present invention, the invention is on the basis of any one of the first aspect to the ninth aspect, and a maximum diameter of the plurality of holes is 5 to 3000 µm.

According to an eleventh aspect of the present invention, the invention is on the basis of any one of the first aspect to the tenth aspect, and a distance between centers of the plurality of holes is 500 to 8000 µm.

According to a twelfth aspect of the present invention, the invention is on the basis of any one of the first aspect to the eleventh aspect, and a surface shape of the plurality of holes is one or more shapes selected from a circle, a triangle, a quadrangle, and a polygon of a pentagon or higher.

According to a thirteenth aspect of the present invention, the invention is on the basis of any one of the first aspect to the twelfth aspect, and the plurality of holes have bottom portions.

According to a fourteenth aspect of the present invention, the invention is on the basis of any one of the first aspect to the thirteenth aspect, and depths of the plurality of holes are 5% or more relative to thickness of the cathode.

According to a fifteenth aspect of the present invention, a lithium ion secondary battery includes the cathode for a lithium ion secondary battery based on any one of the first aspect to the fourteenth aspect.

### [Advantageous Effects of Invention]

The cathode for a lithium ion secondary battery according to a first aspect of the present invention has a current collector made of a porous metal. The active material is supported on the current collector highly densely and a plurality of holes are formed on a surface of the cathode. When the cathode is used in a lithium ion secondary battery, in addition to the surface of the cathode, in the position deep in the thickness direction from the surface of the cathode, transfer of an electron and insertion and release of a lithium ion take place. Thus, the active material present in the position deep in the thickness direction from the surface of the cathode can be effectively utilized, and the lithium ion secondary battery having a high capacity is provided. In addition, when the cathode for a lithium ion secondary battery is used in the lithium ion secondary battery, because the lithium ion released from the active material that is present in the position deep in the thickness direction from the surface of the cathode migrates in an electrolyte solution that is present in the hole, the cell reaction becomes fast, and thereby the lithium ion secondary battery is promptly charged and discharged and has a low internal resistance of the battery with a high output power.

The cathode for a lithium ion secondary battery according to a second aspect of the present invention has the thickness of 100 to 3000 µm. Thus, a large amount of the active material can be supported on the cathode. In addition, the migration distance of the lithium ion in the cathode is not so long, so that the active material can be effectively utilized. Thus, the lithium ion secondary battery having a high capacity is provided.

The cathode for a lithium ion secondary battery according to a third aspect of the present invention includes 69.0 to 98.9% by weight of LiCoO₂ as the active material and 1.0 to 25.0% by weight of the porous metal, and the active material density is 2.53 to 4.04 g/cm³. Thus, the electrode can support the active material highly densely, so that the lithium ion secondary battery having a high capacity can be provided.

The cathode for a lithium ion secondary battery according to a fourth aspect of the present invention includes 69.0 to 98.9% by weight of Li(NiₓMn_{y}Co_{z})O₂ (provided that 0<x<1.0, 0<y<1.0, 0<z<1.0, and x±y+z=1.0) as the active material and 1.0 to 25.0% by weight of the porous metal, and the active material density is 2.30 to 3.68 g/cm³, and thus, the electrode can support the active material highly densely, so that the lithium ion secondary battery having a high capacity can be provided.

The cathode for a lithium ion secondary battery according to a fifth aspect of the present invention includes 69.0 to 98.9% by weight of LiMnzO₄ as the active material and 1.0 to 25.0% by weight of the porous metal, and the active material density is 2.10 to 3.36 g/cm³, and thus, the electrode can support the active material highly densely, so that the lithium ion secondary battery having a high capacity can be provided.

The cathode for a lithium ion secondary battery according to a sixth aspect of the present invention includes 69.0 to 98.9% by weight of LiNiO₂ as the active material and 1.0 to 25.0% by weight of the porous metal, and the active material density is 2.40 to 3.84 g/cm³, and thus, the electrode can support the active material highly densely, so that the lithium ion secondary battery having a high capacity can be provided.

The cathode for a lithium ion secondary battery according to a seventh aspect of the present invention includes 69.0 to 98.9% by weight of LiNi_{0.8}Co_{0.15}Al_{0.05}O₂ as the active material and 1.0 to 25.0% by weight of the porous metal, and the active material density is 2.45 to 3.92 g/cm³; and thus, the electrode can support the active material highly densely, so that the lithium ion secondary battery having a high capacity can be provided.

The cathode for a lithium ion secondary battery according to an eighth aspect of the present invention includes 69.0 to 98.9% by weight of LiFePO₄ as the active material and 1.0 to 25.0% by weight of the porous metal, and the active material density is 1.75 to 2.80 g/cm³, and thus, the electrode can support the active material highly densely, so that the lithium ion secondary battery having a high capacity can be provided.

The cathode for a lithium ion secondary battery according to a ninth aspect of the present invention includes 69.0 to 98.9% by weight of two or more types selected from LiCoO₂, Li(NiₓMn_{y}Co_{z})O₂ (provided that 0<x<1.0, 0<y<1.0, 0<z<1.0, and x+y+z=1.0), LiMn₂O₄, LiNiO₂, LiNi_{0.8}Co_{0.15}Al_{0.05}O₂, and LiFePO₄ as the active material and 1.0 to 25.0% by weight of the porous metal, and the active material density is in a range of more than 1.75 to less than 4.04 g/cm³, and thus, the electrode can support the active material highly densely, so that the lithium ion secondary battery having a high capacity can be provided.

In the cathode for a lithium ion secondary battery according to a tenth aspect of the present invention, a maximum diameter of the holes is 5 to 3000 µm. Hence, in the lithium ion secondary battery using the cathode, the diameters of the holes are suitable for migration of the lithium ions. Thus, the cathode enables the lithium ion secondary battery to achieve a higher capacity and fast charging and discharging.

In the cathode for a lithium ion secondary battery according to an eleventh aspect of the present invention, the distance between centers of the holes is 500 to 8000 µm. Hence, the number of the holes and the distance between the holes are more suitable. Thus, the cathode enables the lithium ion secondary battery to achieve a higher capacity and fast charging and discharging.

In the cathode for a lithium ion secondary battery according to a twelfth aspect of the present invention, shapes of openings of the holes is one or more shapes selected from a circle, a triangle, a quadrangle, a pentagon, and a polygon with the number of vertices greater than 5. Thus, the shapes of the holes are suitable for a cell reaction. Thus, the cathode enables the lithium ion secondary battery to achieve a higher capacity and fast charging and discharging.

In the cathode for a lithium ion secondary battery according to a thirteenth aspect of the present invention, the holes have bottom portions. Hence, the holes have good liquid-retention property. Accordingly, the electrolyte solution is retained in the holes in the cathode for a lithium ion secondary battery even when a battery is tilted and an electrolyte solution is moved to one side. Thus, cathode enables the lithium ion secondary battery to prevent or inhibit deterioration of the performance.

In the cathode for a lithium ion secondary battery according to a fourteenth aspect of the present invention, the depth of each of the holes is 5% or more relative to thickness of the cathode. Hence, the depths of the holes are suitable for a cell reaction, and the active material present in the position deep in the thickness direction from surface of the cathode is utilized effectively. The cathode enables the lithium ion secondary battery to achieve a high capacity and fast charging and discharging.

The lithium ion secondary battery according to a fifteenth aspect of the present invention includes the cathode for a lithium ion secondary battery according to any one of the first to fourteenth aspects. Thus, the lithium ion secondary battery achieves a higher capacity and fast charging and discharging.

### [Brief Description of the Drawings]

FIG. 1 is a schematic end view showing a longitudinal sectional view of electrode structure of a lithium ion secondary battery according to an embodiment of the present invention.
FIG. 2 is a plan view showing arrangement of openings of the holes on a surface of a cathode according to an embodiment of the present invention.

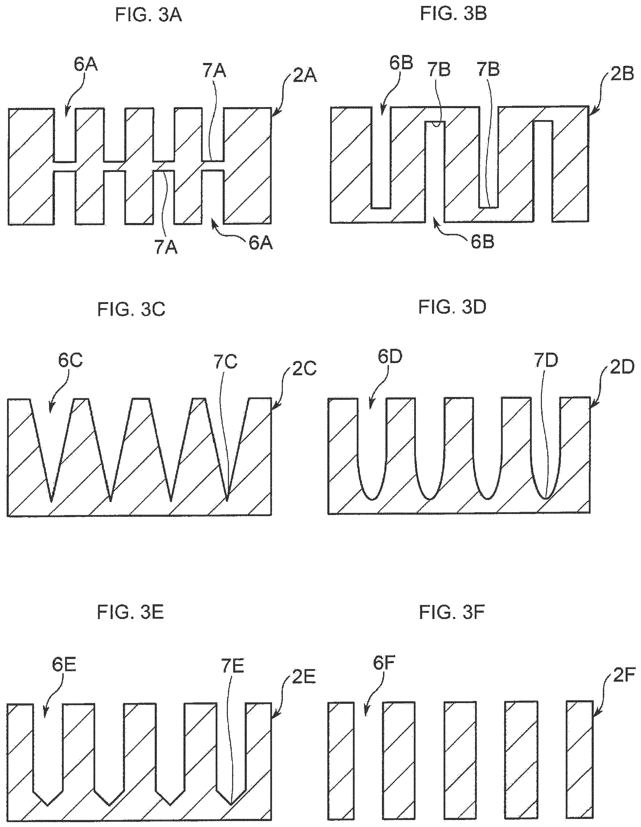

FIGs. 3A to 3F are schematic end views showing the longitudinal sectional views of the cathodes according to modified embodiments of the present invention: FIG. 3A shows a cathode having holes formed in both surfaces thereof; FIG. 3B shows a cathode having the holes with the openings arranged alternately on top and bottom surfaces; FIG. 3C shows a cathode having holes with triangular longitudinal sectional shape; FIG. 3D shows a cathode having holes with U-shaped sectional shape; FIG. 3E shows a cathode having holes with pentagonal sectional shape; and FIG. 3F shows a cathode having penetrating holes.
FIG. 4 is a plan view showing an arrangement of the openings of the holes on the surface of the cathode according to a modified embodiment of the present invention.
FIGs. 5A to 5C are plan views showing surface shapes of the cathodes according to modified embodiments of the present invention: FIG. 5A shows a cathode having holes with triangular surface shape; FIG. 5B shows a cathode having holes with quadrangular surface shapes; and FIG. 5C shows a cathode having holes with hexagonal surface shape.
FIGs. 6A to 6G are plan views showing star-shaped openings of the holes formed in the cathodes according to modified embodiments of the present invention: FIG. 6A shows a star-shaped opening with three points; FIG. 6B shows a star-shaped opening with four points; FIG. 6C shows a star-shaped opening with five points; FIG. 6D shows a star-shaped opening with six points; FIG. 6E shows a star-shaped opening with seven points; FIG. 6F shows a star-shaped opening with eight points; and FIG. 6G shows a star-shaped opening with ten points.
FIGs. 7A and 7B are schematic end views showing longitudinal sections of electrode structures of the lithium ion secondary batteries according to modified embodiment of the present invention: FIG. 7A shows the electrode structure of the lithium ion secondary battery including a stack of electrodes having the holes formed in the both sides of each of the electrodes; FIG. 7B shows the electrode structure of the lithium ion secondary battery including a stack of electrodes, each having holes with openings arranged alternately on top and bottom surfaces.
FIG. 8 is a schematic end view showing a longitudinal section of the cathode according to a modified embodiment of the present invention.

### [Description of the Embodiments]

Hereinafter, the embodiments of the present invention will be described in detail with reference to drawings.

### 1. Configuration of lithium ion secondary battery according to embodiments of present invention

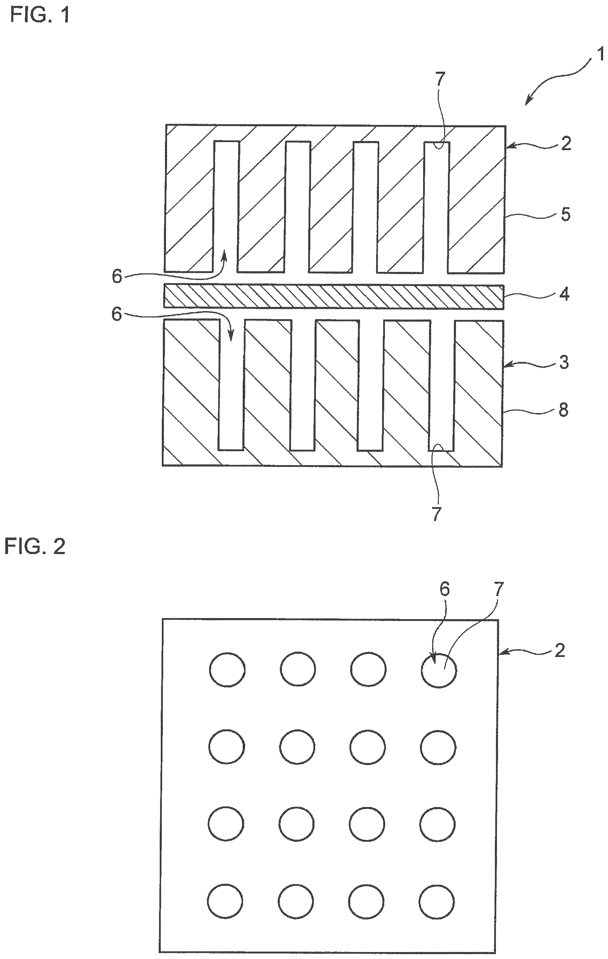

As illustrated in FIG. 1, a lithium ion secondary battery 1 includes a cathode 2 for a lithium ion second battery (hereinafter, referred to as the cathode 2), an anode 3, and a separator 4. The cathode 2, the anode 3, and the separator 4 are immersed in an electrolyte solution, which is a mixture of a non-aqueous solvent including, for example, EC (ethylene carbonate), DEC (diethyl carbonate), MEC (methyl ethyl carbonate), or DMC (dimethyl carbonate), with a lithium salt such as LiPF₆, LiBF₄, and LiClO₄. Holes 6 are disposed in the cathode 2, and the holes 6 have openings on the surface of the cathode 2. The openings of the holes 6 of the cathode 2 are arranged to face the separator 4.

Similar to the cathode 2, holes 6 are disposed in the anode 3, and the holes 6 have openings on the surface of the anode 3. The holes 6 formed in the anode 3 are arranged to face the openings of the holes 6 of the cathode 2 through the separator 4. The opening of the hole 6 formed in the cathode 2 does not necessarily face the opening of the hole 6 formed in the anode 3; however, it is preferable that at least one of openings on the cathode 2 faces at least one of openings on the anode 3. In the case where the hole 6 of the cathode 2 faces the hole 6 of the anode 3 through a separator, a lithium ion and a counter ion thereof (for example, PF₆⁻ ion) in the electrolyte solution migrate smoothly between the hole 6 of the cathode 2 and the hole 6 of the anode 3, so that a cell reaction is facilitated furthermore.

The anode 3 is not particularly limited and a publicly known anode for a lithium ion secondary battery may be used. The anode 3 may be, for example, a conventional composite electrode including an active material layer formed from a mixed material containing an active material and a current collector made of aluminum foil. The active material layer is disposed on a surface of. The active material layer is formed without holes.

### 2. Configuration of cathode according to embodiments of present invention

As illustrated in FIG. 1, the holes 6 are formed in the surface of the cathode 2. The cathode 2 includes a current collector 5 made of a porous metal and an active material (not shown) supported on the current collector 5. The current collector 5 has a three-dimensional mesh-shaped structure with a plurality of micropores. Most part of the three-dimensional mesh-shaped structure is formed such that the metal meshes are seamlessly connected to each other. The metal contained in the porous metal is not particularly limited as long as the metal is not affected by a chemical reaction that takes place during charging or discharging of the battery. For example, aluminum or an alloy including aluminum as a main component may be used. Examples of the porous metal include a metal foam and a three-dimensional structural body of a sintered powder produced by a slurry foaming method using metal powder such as aluminum as a raw material. In the case of the present embodiment, the current collector 5 is formed by using aluminum foam as the porous metal. As described above, the cathode 2 has the holes 6 and the countless micropores.

The micropores of the current collector 5 stores a mixture including the active material, a conduction assisting agent, and a binder, and thus the active material is supported on the cathode 2. The micropores are not completely filled with the mixture, and there is a remaining space (void) in each of the micropores. In a case where the cathode 2 is used in the lithium ion secondary battery, the electrolyte solution is stored in the remaining spaces (voids). The active material may include at least one selected from LiCoO₂ (hereinafter, referred to as LCO), Li(NiₓMn_{y}Co_{z})O₂ (provided that 0<x<1.0, 0<y<1.0, 0<z<1.0, and x+y+z=1.0) (hereinafter, referred to as the ternary cathode material or ternary cathode), LiMn₂O₄ (hereinafter, referred to as LMO), LiNiO₂ (hereinafter, referred to as LNO), LiNi_{0.8}Co_{0.15}Al_{0.05}O₂ (hereinafter, referred to as NCA), LiFePO₄ (hereinafter, referred to as LFP), and the like.

The cathode 2 includes the active material with the active material density of 50 to 80% relative to the true density of the active material. The active material density represents the weight of the active material included in a unit volume.

For example, when LCO is used as the active material, because the true density of LCO is 5.05 g/cm³, the active material density of the cathode 2 is 2.53 to 4.04 g/cm³.

Similarly, when the ternary cathode material is used as the active material, because the true density of the ternary cathode material is 4.6 g/cm³, the active material density is 2.30 to 3.68 g/cm³. Here, the true density of the ternary cathode material having the composition of Li(Ni_{1/3}Mn_{1/3}CO_{1/3})O₂ is used. The true density of the ternary cathode material is approximately the same as the above even when the composition thereof is different.

When LMO is used as the active material, because the true density of LMO is 4.2 g/cm³, the active material density is 2.10 to 3.36 g/cm³.

When LNO is used as the active material, because the true density of LNO is 4.8 g/cm³, the active material density is 2.40 to 3.84 g/cm³.

When NCA is used as the active material, because the true density of NCA is 4.9 g/cm³, the active material density is 2.45 to 3.92 g/cm³.

When LFP is used as the active material, because the true density of LFP is 3.5 g/cm³, the active material density is 1.75 to 2.80 g/cm³.

In a case where two or more types of the active materials are used, the true density is higher than 3.5 g/cm³, which corresponds to the true density of the active material consisting of 100% LFP having the lowest true density, and lower than 5.05 g/cm³, which corresponds to the true density of the active material consisting of 100% LCO having the highest true density. Therefore, the active material density is in the range of more than 1.75 g/cm³ to less than 4.04 g/cm³.

The above-described cathode 2 includes 69.0 to 98.9% by weight of the active material, 0 to 3.0% by weight of the conduction assisting agent, 0.1 to 3.0% by weight of the binder, and 1.0 to 25.0% by weight of the porous metal, provided that total weight of the active material, the conduction assisting agent, the binder, and the porous metal is 100% by weight. Because the current collector 5 made of the porous metal has a high electric conductivity, the cathode 2 may not include the conduction assisting agent.

The holes 6 formed in the cathode 2 have the openings on the surface of the cathode 2. The center axes of the holes are disposed along the thickness direction of the cathode 2. In the case of the present embodiment, the hole 6 has the opening formed on one of the two surfaces of the cathode 2 and the bottom portion 7 formed in the other of the two surfaces. The hole 6 has a cylindrical shape. The longitudinal sectional shape of the hole 6 is a quadrangle. The bottom portion 7 is formed by (included in) the cathode 2.

The thickness of the cathode 2 is not particularly limited, but preferably 100 to 3000 µm. With the cathode 2 having the thickness of 100 to 3000 µm, sufficient strength is achieved even when a metal foam is used as the porous metal, which constitutes the skeleton of the current collector 5. In addition, the cathode 2 supports a sufficient amount of the active material, so that the lithium ion secondary battery having a high battery capacity is provided. With the cathode 2 used in the lithium ion secondary battery, the migration distance of the lithium ions is not so long, so that the charging and discharging characteristics of the lithium ion secondary battery is enhanced. The thickness of the cathode 2 herein means the thickness of the cathode 2 in the state that the active material is supported in the micropores of the porous metal constituting the current collector 5 and the holes 6 are formed in the cathode 2.

The thickness of the cathode 2 is more preferably 300 to 3000 µm. The cathode 2 having the thickness of 300 to 3000 µm enables the lithium ion secondary battery to more reliably achieve a high capacity and high-speed charging and discharging.

FIG. 2 shows the surface of the cathode 2 formed with the openings of the holes 6. The openings of the holes 6 are disposed at equal intervals in lengthwise and crosswise directions on the surface of the cathode 2. The surface shape (the shape of the opening) of the hole 6 is a circle (round).

The maximum diameter of the holes 6 is not particularly limited, but preferably 5 to 3000 µm. In a case where the maximum diameter of the holes 6 of the cathode 2 used in the lithium ion secondary battery is 5 to 3000 µm, the lithium ions smoothly migrate in the electrolyte solution in the holes 6, so that the rate of the cell reaction is enhanced. In addition, a small number of voids in the cathode 2 are reduced by compression upon forming the holes 6. Hence, the amount of the active material to be effectively utilized is increased by forming the holes 6.

The maximum diameter of the holes 6 is particularly preferably 50 to 2000 µm. In a case where the maximum diameter of the holes 6 is 50 to 2000 µm in the cathode 2 used in the lithium ion secondary battery, the lithium ions migrate more smoothly in the electrolyte solution in the holes 6 with the increased diameter. Thereby, the rate of the cell reaction is further enhanced.

The length (holes' center-to-center distance) between the centers of the adjacent holes 6 is not particularly limited, but preferably 500 to 8000 µm. In a case where the holes' center-to-center distance is 500 to 8000 µm in the cathode 2, the regions that the lithium ion in the electrolyte solution reaches from one of the holes 6 do not overlap, and the region that the lithium ions in the electrolyte solution in the cathode 2 cannot reach decreases. Thus, the active material to be effectively utilized is increased by forming the holes 6.

The holes' center-to-center distance between the holes 6 is particularly preferably 1000 to 6000 µm. In a case where the holes' center-to-center distance between the holes 6 is 1000 to 6000 µm, the lithium ions in the electrolyte solution can reach every part of the cathode 2 more readily. Thus, the active material to be effectively utilized increases.

The depth of the hole 6 is not particularly limited, but preferably 5% or more relative to the thickness of the cathode 2. In a case where the depth of the hole 6 is 5% or more, the lithium ions in the electrolyte solution readily reach the deep regions in the depth direction of the cathode 2. Thus, the active material to be effectively utilized increases.

The depth of the hole 6 is particularly preferably 60% or more relative to the thickness of the cathode 2. In a case where the ratio of the depth of the hole 6 relative to the thickness of the cathode 2 is 60% or more, the lithium ions in the electrolyte solution more readily reach the deep regions in the depth direction of the cathode 2. Thus, the active material to be effectively utilized increases further.

### 3. Method for producing metal foam

A method for producing the metal foam, which is used as the porous metal in the embodiments of the present invention, will be described. Firstly, a slurry is prepared by mixing fine metal powders with a water-soluble surfactant. Next, the slurry is thinly applied onto a PET film with a doctor blade method to form a sheet. Simultaneously with this, the sheet is heated to a predetermined temperature. Thereby, the sheet is dried while foam is generated therein. Thereafter, the dried sheet is sintered in a non-volatile atmosphere at a predetermined temperature to obtain the metal foam.

The method for producing the metal foam is not limited to this. The metal foam may be produced by other methods, for example, a plating method. Here, the method for producing the metal foam by a plating method will be described. A nickel foam is produced by way of example. Firstly, the electroless nickel plating is performed for a predetermined period of time on urethane foam used as a skeleton. Thus, the conductive treatment is performed on the surface of the skeleton of the urethane foam. Next, electroplating of nickel is performed for a predetermined period of time, so that nickel is plated onto the urethane foam to form a nickel skeleton. Subsequent to this, in an oxidizing atmosphere at 500 to 700°C, the urethane resin is oxidized and removed from the nickel skeleton. Finally, in a reducing atmosphere at the temperature of approximately 1000°C, nickel oxide formed in the oxidation process of the urethane resin is reduced to nickel metal. Thus, the nickel foam is obtained.

A void ratio of the metal foam used in the present invention is calculated as described below. Firstly, the volume and the weight of the metal foam are measured to calculate the weight per unit volume. Next, the weight per unit volume in the state that the unit volume of the metal foam is packed with the metal, namely, a true density of the metal is defined as 100% metal occupation rate. Relative to the 100% metal occupation rate, the weight per unit volume of the metal foam is converted into a percentage value (metal occupation rate). By subtracting the calculated metal occupation rate of the metal foam from 100, the void ratio is calculated. For example, in a case where the metal weight per unit volume is 50% relative to the true density, the metal occupation rate is 50% and the void ratio is 50%. The void ratio of the metal foam is not particularly limited, but preferably 65 to 98%. When the void ratio is less than 65%, the skeleton formed by the porous metal cannot support a sufficient amount of the active material. When the void ratio is more than 98%, the skeleton formed by the porous metal is brittle.

The average pore diameter of the metal foam is not particularly limited. In a case of aluminum foam, the average pore diameter is preferably in the order of 100 to 300 µm. To obtain the average pore diameter of the metal foam, pore diameters of 30 micropores on the metal foam are measured by an optical microscope and the average value of the pore diameters is calculated.

### 4. Method for producing cathode according to embodiment of present invention

A production method includes (1) a process of producing a cathode slurry, (2) a process of supporting an active material on the current collector, and (3) a process of forming a cathode into a predetermined shape.
(1) A process of producing a cathode slurry will be described. The cathode slurry is a solution that allows the cathode 2 to support the active material. The cathode slurry is commonly called as mixture slurry.

Firstly, each of an active material, a binder, and a conduction assisting agent is weighed to achieve a predetermined weight ratio. After weighing, the binder is added to a solvent and stirred, and then the active material and the conduction assisting agent are added thereto and stirred, and viscosity is adjusted. Thus, the cathode slurry is obtained.

Acetylene black (hereinafter, referred to as AB), Ketjen black (hereinafter, referred to as KB), carbon nanotube (hereinafter, referred to as CNT), and the like may be used as the conduction assisting agent. Polyvinylidene fluoride (hereinafter, referred to as PVDF) and the like may be used as the binder.
(2) A process of supporting an active material on a current collector will be described. Firstly, the porous metal is formed into a predetermined shape to produce the current collector 5. Thereafter, the current collector 5 is immersed in the cathode slurry for a predetermined period of time. Then, the current collector 5 is dried for a predetermined period of time at a predetermined temperature to obtain the current collector 5 on which the active material is supported.
(3) A process of forming a cathode into a predetermined shape will be described. In this process, the current collector 5 supporting the active material is introduced into a roll press machine to shape the current collector 5 into the predetermined thickness. Thereafter, the holes 6 are formed by pressing a jig with many needles closely arranged in a pinholder shape against the surface of the current collector 5. Thus, the cathode 2 is obtained. The weight of the active material supported on the cathode 2 is adjusted by changing the viscosity of the cathode slurry. The active material density of the cathode 2 is adjusted by changing the thickness of the current collector 5. The thickness of the current collector 5 is changed by adjusting the distance (a gap) between the rolls of the roll press machine.

The holes 6 having a small diameter of 500 µm or less may be formed by laser processing. In this method, the size of the hole 6 to be formed is adjusted by changing the diameter of laser beams. A hole having a wedge-shape may be formed by changing an angle of incidence of the laser beams.

The cathode 2 for a lithium ion secondary battery is produced by the processes described above. The electrode produced by the above-described method with the use of the cathode slurry corresponds to a so-called composite electrode.

### 5. Action and effects

An action of the lithium ion secondary battery 1 using the cathode 2 according to the embodiments of the present invention will be described. In the lithium ion secondary battery 1, the cathode 2 and the anode 3 are immersed in the electrolyte solution. The electrolyte solution is present in the hole 6 in the cathode 2 and in the space (void) in the active material on the cathode 2. Since the hole 6 is formed in the cathode 2, the electrolyte solution is also present in the space (void) deep in the thickness direction from surface of the cathode 2.

Firstly, an action of the lithium ion secondary battery 1 at the time of charging will be described. A voltage is applied between the cathode 2 and the anode 3 through an outer circuit (not shown). Thereby, the lithium in the active material in the cathode 2 is released as lithium ions into the electrolyte solution. With this, electrons are released from the active material. Since the hole 6 is formed in the cathode 2, this reaction takes place not only in the surface of the cathode 2 facing the anode 3 but also in a position deep in the thickness direction from the surface of the cathode 2, which position is far from the anode 3.

The electron released from the active material migrates from the cathode 2 to the anode 3 through the outer circuit. The lithium ion migrates to the anode 3 through the electrolyte solution and is inserted into the active material, and receives an electron in the active material. Since the hole 6 is formed in the cathode 2 as described above, the lithium ion migrates in the electrolyte solution that is present in the hole 6. Thereby the lithium ion readily migrates a long distance from the cathode 2 to the anode 3. Thus, the lithium ion secondary battery 1 is charged.

Next, the action of the lithium ion secondary battery 1 at the time of discharging will be described. The cathode 2 and the anode 3 are connected to an outside load (not shown). Hence, the lithium in the active material in the anode 3 is released as lithium ions into the electrolyte solution. With this, the electrons are released from the active material.

The electron released from the active material migrates from the anode 3 to the cathode 2 through the outside load. The lithium ion released from the active material migrates to the cathode 2 through the electrolyte solution. The lithium ion is inserted into the active material in the cathode 2. Since the hole 6 is formed in the cathode 2, the lithium ion migrates in the electrolyte solution present in the hole 6. Thereby the migration of the lithium ion is facilitated, and the lithium ion is inserted into the active material not only in the surface of the cathode 2 but also in the position deep in the thickness direction of the cathode 2. Thus, the lithium ion secondary battery 1 is discharged.

In the configuration described above, the cathode 2 for a lithium ion secondary battery according to the embodiments of the present invention includes the current collector 5 and the active material supported on the current collector 5. The current collector is made of the porous metal. The holes 6 are formed in the surface of the cathode 2. The active material density of the cathode 2 is 50 to 80% relative to the true density of the active material.

In the cathode 2 for a lithium ion secondary battery according to the embodiments of the present invention, the active material is supported highly densely and a plurality of the holes 6 are formed in the surface of the cathode 2. Thus, when the cathode 2 is used in the lithium ion secondary battery 1, migration of the lithium ion is facilitated, so that the transfer of the electrons and the insertion and the release of the lithium ions occur in the surface of the cathode 2 and in the position deep in the thickness direction from surface of the cathode 2. As a consequence, in the lithium ion secondary battery 1 using the cathode 2, the lithium ion released from the active material in the position deep in the thickness direction from the surface of the cathode 2 migrates in the electrolyte solution that is present in the hole 6. Hence, the cell reaction is facilitated. The fast charging and the fast discharging are performed. The cell with a low internal resistance, a high output, and a high capacity is achieved.

The cathode 2 for a lithium ion secondary battery according to the embodiments of the present invention has the thickness in a range of 100 to 3000 µm. Hence, the cathode 2 supports more amount of the active material and thus the lithium ion secondary battery achieves a higher capacity.

Since, the ionic radius of the lithium ion is extremely small, it is considered that the lithium ion is solvated by many solvents in the electrolyte solution. The solvated lithium ion has a high migration resistance. In a case of a conventional composite electrode having a flat surface formed by drying a mixture slurry, the lithium ion and the PF₆⁻ ion, which is the counter ion of the lithium ion when, for example, LiPF₆ is added as the lithium salt into the electrolyte solution, migrate in the electrolyte solution filled in the micropores, which are formed among the active materials in the electrode. In the lithium ion secondary battery using the conventional composite electrode, the solvated lithium ion and the PF₆⁻ ion pass through the electrolyte solution filled in the micropores. Thereby, the lithium ion and the PF₆⁻ ion were readily trapped in the micropores among the active materials, and the migration resistance is high.

On the other hand, in the case of the present embodiments, since the hole 6 is formed in the cathode 2, the lithium ion and the PF₆⁻ ion preferentially pass through the electrolyte solution that is present in the hole 6. The hole 6 constitutes a preferential path, through which the ions rapidly migrate. Hence, the lithium ions migrate in the cathode 2 without being hindered.

Since the cathode 2 includes the current collector 5 made of the porous metal, the metal skeleton is present in the entire cathode 2. As compared with carbon black such as acetylene black, which has been conventionally used as the conduction assisting agent, the volume resistance of the metal simple substance such as aluminum is as low as in the order of 1/1000. Therefore, the electron migrates in the metal skeleton having a low resistance, and thus, the electron resistance in the cathode 2 is in a substantially negligible level.

Accordingly, with the combined use of the holes 6 and the metal skeleton in the cathode 2 for a lithium ion secondary battery according to the embodiments of the present invention, the cell reaction is fast even when the active material is packed densely in the cathode 2 and even when the electrode is thick. Therefore, the cathode 2 enables the lithium ion secondary battery to charge and discharge rapidly.

It has been conventionally considered that the most significant rate-limiting factor of the cell reaction is a long migration distance of the lithium ion. For this reason, the electrode having the thickness of 100 µm or more hardly existed for the commercially available lithium ion secondary batteries. Actually, however, as described above, it is considered that the migration resistance of the solvated lithium ion and the PF₆⁻ ion passing through the micropores formed among the active material particles in the composite electrode is the most significant rate-limiting factor of the cell reaction. The hole 6 formed in the surface of the cathode 2 enables the lithium ion and the PF₆⁻ ion to migrate smoothly through the electrolyte solution present in the hole 6. Thereby, the rate of the cell reaction is increased.

In the case of the conventional composite electrode having a flat shape and formed without holes in the surface, the electrolyte solution is not likely to reach a position deep in the thickness direction of the electrode. Hence, the active material to be effectively utilized has been limited to that present in a range between the surface of the electrode and approximately 100 µm from the surface. The voids (spaces) in the mixed material decrease as the active material density in the electrode increases, and hence the electrolyte solution is not likely to be impregnated in the mixed material. Thus, the active material to be effectively utilized has been limited to that present in shallower regions.

On the contrary, in the cathode 2 for a lithium ion secondary battery according to the embodiments of the present invention, the lithium ion migrates in the electrolyte solution present in the hole 6, even in a case where the electrode is thick and supports the active material at a high density. The thickness of the cathode 2 is in a range of 100 to 3000 µm. The active material density is as high as 50 to 80% relative to the true density of the active material. Thus, the lithium ion migrates to a position deep in the thickness direction of the cathode 2, so that the active material that is present in the position deep in the thickness direction is effectively utilized.

Therefore, the lithium ion secondary battery 1 using the cathode 2 for a lithium ion secondary battery according to the embodiments of the present invention has a high capacity and charges and discharges rapidly.

In conventional technologies, in order to increase the capacity of the lithium ion secondary battery, a plurality of the cathodes and the plurality of anodes are stacked through the separators. However, in the cathode 2 for a lithium ion secondary battery according to the embodiments of the present invention, the capacity of the battery is increased by increasing the thickness of the cathode 2 and by increasing the active material density. Thus, the single-layer cathode 2 used in the lithium ion secondary battery 1 enables the battery to achieve a high capacity with the reduced number of the separator(s) 4.

In the cathode 2 for a lithium ion secondary battery according to the embodiments of the present invention, the current collector 5 includes the skeleton formed from the porous metal. The electrons are transmitted through the skeleton formed from the metal, so that the cathode 2 has a high electric conductivity. Hence, an amount of the conduction assisting agent included in the cathode 2 is reduced. The cathode 2 includes the metal skeleton made of the porous metal, and the active material is stored in the micropores in the metal skeleton. Hence, an amount of the binder, being the binding agent, is reduced. As a consequence, the cathode 2 supports more amount of the active material.

In the cathode 2 for a lithium ion secondary battery according to the embodiments of the present invention, the holes 6 include the bottom portions 7. Hence, the liquid-retention property of the hole 6 is enhanced. With the cathode 2 used in the lithium ion secondary battery 1, the electrolyte solution is retained in the hole 6 even when the lithium ion secondary battery 1 is tilted and the electrolyte solution is moved to one side. Thus, deterioration in the performance of the lithium ion secondary battery 1 is reduced.

### 6. Modified embodiment

The present invention is not limited to the above embodiments, and changes may be made within the scope of the present invention.

For example, the active material, the binder, the conduction assisting agent, the electrolyte solution, the porous metal, a material of the separator, or the like may be changed.

In the above embodiments, the shape of the opening of the hole 6 is a circle (round shape) and the longitudinal sectional shape of the hole 6 is a quadrangle. The present invention is not limited to this and the longitudinal sectional shape of the hole 6 may be changed. For example, as illustrated in FIG. 3A, the longitudinal sectional shape of the hole 6A is a quadrangle, and the openings are formed on the two surfaces of the cathode 2A, and the bottom portions 7A are formed approximately in the middle in the thickness direction of the cathode 2A. As illustrated in FIG. 3B, the holes 6B having the openings on a first surface of the two surfaces of the cathode 2B and the bottom portions in a second surface of the two surfaces and the holes 6B having the bottoms portions in the first surface and the openings on the second surface may be arranged alternately. As illustrated in FIG. 3C, the longitudinal sectional shape of the hole 6C is a triangle and the apex part of the triangle constitutes the bottom portion 7C. As illustrated in FIG. 3D, the longitudinal sectional shape of an end of the hole 6D is a semicircle, the peak point of the semicircle constitutes the bottom portion 7D. In this modified embodiment, the longitudinal sectional shape of the 6D is a U-shape. As illustrated in FIG. 3E, an end of the longitudinal sectional shape of the hole 6E is a triangle and the apex part of the triangle constitutes the bottom portion 7E. In this modified embodiment, the longitudinal sectional shape of the hole 6E is a pentagon. Each of the hole 6A formed in the cathode 2A shown in FIG. 3A and the hole 6B formed in the cathode 2B shown in FIG. 3B has the longitudinal sectional shape of a quadrangle; however, the longitudinal sectional shape may be a triangle. Each of the longitudinal sectional shapes of the ends of the holes 6A and 6B may be a circle or a semicircle.

In the embodiments and the modified embodiment described above, the hole 6 has the bottom portion 7. The present invention is not limited to this. The hole 6 may not have the bottom portion 7. For example, as illustrated in FIG. 3F, the hole 6F is a penetrating hole penetrating from one surface to the other surface of the cathode 2F. The shape of the cross-section of the penetrating hole is not limited to the quadrangle shown in FIG. 3F. For example, it may be a trapezoid, or a U-shape with its round-end open. The holes 6 formed in the cathode 2 may not necessarily have the same longitudinal sectional shape. The holes 6 having different longitudinal sectional shapes may coexist. The penetrating hole and the hole 6 having the bottom portion 7 may coexist.

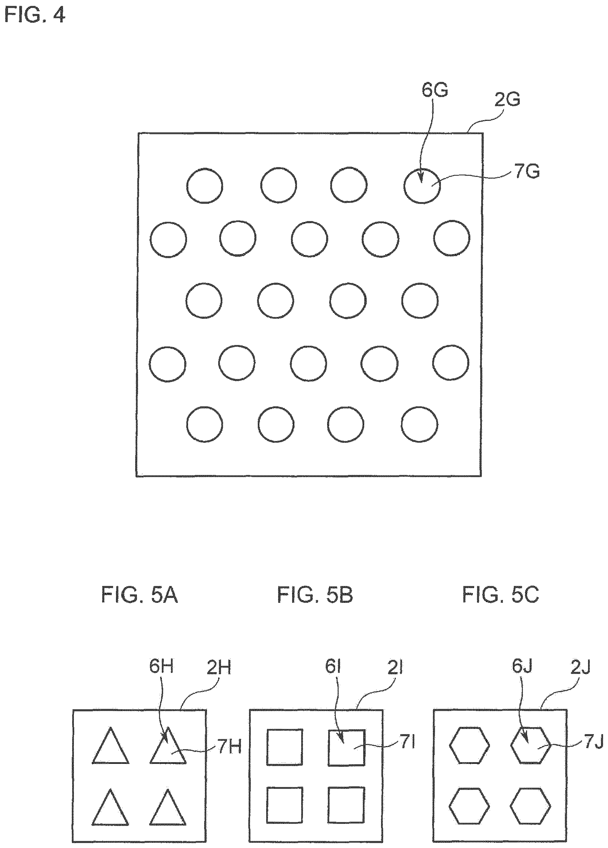

In the embodiments described above, the holes 6 are arranged at equal intervals in the lengthwise and crosswise directions in the surface of the cathode 2. The present invention is not limited to this. For example, as illustrated in FIG. 4, in the surface of the cathode 2G, the holes 6G are arranged at equal intervals along each of the axes, which are parallel to a diagonal line and disposed at predetermined intervals. The holes may be arranged at predetermined intervals along the concentric circles around the center of the cathode 2.

In the embodiments described above, the explanation has been made with regard to the case that the shape of the opening of the hole 6 is a circle while the longitudinal sectional shape thereof is a quadrangle. The present invention is not limited to this, and the shape of the opening of the hole 6 may be changed. For example, the shape of the opening may be a triangle as shown by the hole 6H in FIG. 5A. The shape of the opening may be a quadrangle as shown by the hole 6I in FIG. 5B. The shape of the opening may be a hexagon as shown by the hole 6J in FIG. 5C.

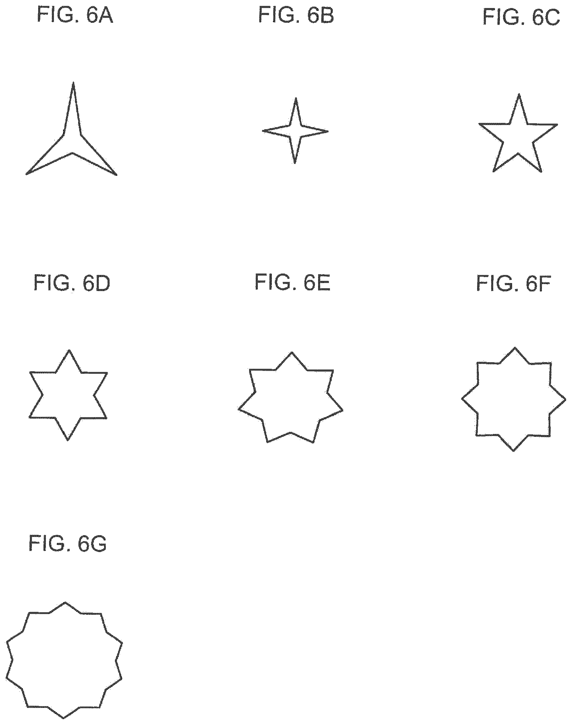

Likewise, the shape of the opening of the hole 6 may be a pentagon, a heptagon, or a polygon with the number of vertices greater than 7. For example, the shapes of the openings of the holes 6 may be stars having approximately 3 to 10 points as illustrated in FIG. 6A to FIG. 6G. All the shapes of the openings of the holes 6 formed in the cathode 2 may not necessarily be the same. The holes 6 having the openings with different shapes may coexist.

The shape of the opening of the hole 6, the sectional shape of the hole 6, and the longitudinal sectional shape of the end of the hole 6, which are described in the modified embodiments, may be combined. For example, a hole may have an opening having a quadrangular shape and a triangular longitudinal sectional shape.

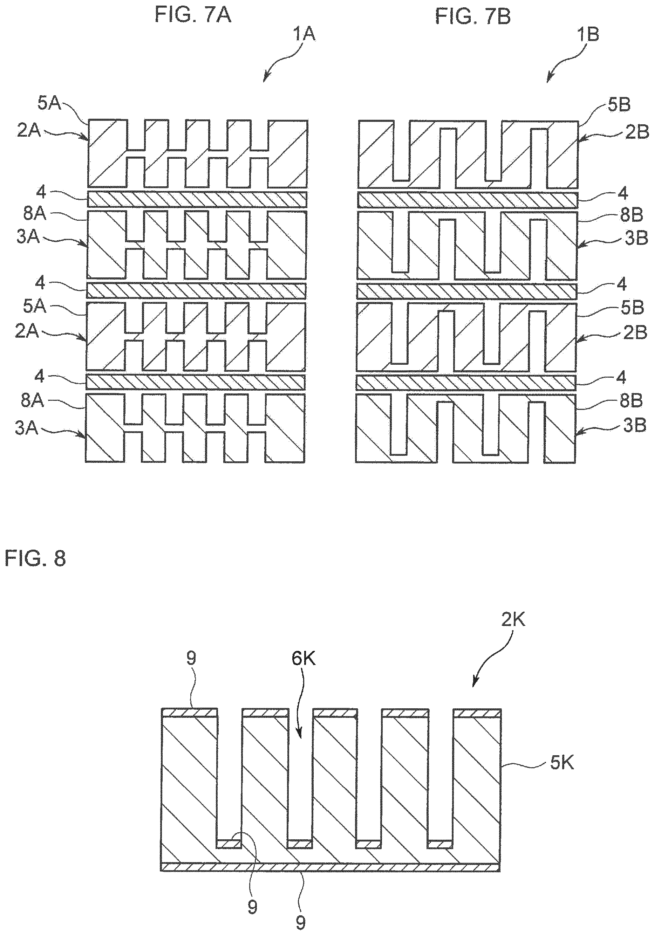

In the above embodiments, the lithium ion secondary battery 1 has a monolayer structure, in which one cathode 2 and one anode 3 are stacked through the separator 4. The present invention is not limited to this. The lithium ion secondary battery may have a multilayer structure, in which the cathodes 2 and the anodes 3 are further stacked through the separators 4. For example, as illustrated in FIG. 7A, a lithium ion secondary battery 1A having a multilayer structure may be produced by using cathodes 2A, each including a current collector 5A, and anodes 3A, each including a current collector 8A. The current collector 8A is the same as or similar to the current collector 5A. The lithium ion secondary battery 1A has a structure in which the cathodes 2A and the anodes 3A are alternately stacked through the separators 4. As illustrated in FIG. 7B, a lithium ion secondary battery 1B having a multilayer structure may be produced by using cathodes 2B, each including a current collector 5B, and anodes 3B, each including a current collector 8B. The current collector 8B is the same as or similar to the current collector 5B.

In these cases, in the lithium ion secondary battery 1A, all the openings of the holes on the cathode 2A respectively face the openings of the holes on the anode 3A through the separator. Hence the lithium ions readily migrate between the cathode 2A and the anode 3A, so that the battery is charged and discharged more efficiently. In the lithium ion secondary battery 1B, holes with their openings facing the separator exist for each of the separators. Hence, the battery is charged and discharged more efficiently.

In the embodiments described above, the mixture including the active material, the conduction assisting agent, and the binder is stored in the micropores of the current collector 5, which is made of the porous metal. Thus, the active material is supported on the cathode 2. The present invention is not limited to this. As illustrated in FIG. 8, a cathode 2K may include an active material layer 9 in addition to the micropores. The active material layer 9 is formed on the outermost surface of the current collector 5K and contains the mixture including the active material, the conduction assisting agent, and the binder. Thus, the active material is supported also on the active material layer 9. The active material layer 9 is formed by drying cathode slurry remained on the surface of the current collector 5K, after the process of immersing the current collector 5K in the cathode slurry and then drying the current collector 5K such that the active material is supported on the current collector 5K. The active material layer 9 may be formed by applying the cathode slurry onto the surface of the current collector 5K and then drying the current collector 5K, after the current collector 5K is immersed in the cathode slurry. The total thickness of the active material layers 9 on both surfaces of the current collector 5K is preferably 40% or less relative to the thickness of the current collector 5K. In a case where the total thickness of the active material layers 9 on the current collector 5K is 40% or more (that is, in a case where the thickness of the active material layer 9 on one surface is 20% or more) relative to the thickness of the current collector 5K, the internal resistance of the cathode 2K increases because the active material layer 9 has poor electron conductivity due to the lack of the metal skeleton.

### (Example I)

### (1) Preparation of electrochemical cell

In each of Examples 1 to 5, a cathode for a lithium ion secondary battery of the present invention was prepared. LCO was supported on the current collector of the cathode. The cathode was used in an electrochemical cell. The configurations of electrochemical cells in Examples 1 to 5 are the same except for the depths of the holes formed in the cathodes. Hereinafter, a method for preparing the electrochemical cell of Example 1 will be described by way of example.

Firstly, each of LCO, which was used as the active material, PVDF, which was used as the binder, and AB, which was used as the conduction assisting agent, was weighed so as to obtain the weight ratio of 98 : 1 : 1. Thereafter, the weighed PVDF was added to N-methyl-2-pyrrolidone (NMP), which was used as the solvent, and the resulting mixture was stirred for 20 minutes. Further, LCO and AB were added to the resulting mixture and the mixture was stirred, and the viscosity was adjusted to 5 Pa·s. Thus, the cathode slurry was obtained.

Next, 200 g of aluminum fine powder (average particle diameter: 5 µm, manufactured by Sigma-Aldrich Co. LLC), 6 g of water-soluble surfactant (product name: Emal, part number: 20T, manufactured by Kao Corp.), and 500 mL of water were mixed to obtain a slurry. The slurry thus obtained was thinly applied onto a PET film (product name: Torayfan, part number: 2500T, manufactured by Toray Industries, Inc.) by a doctor blade method, to form a sheet. In this process, the formed sheet was dried by heating at 50°C while foam is generated therein. Then, the sheet was sintered in an argon atmosphere at the temperature of approximately 500°C to obtain aluminum foam with the void ratio of 95% and the thickness of 440 µm. The aluminum foam thus obtained was trimmed to the size of 3 x 3 cm to form a current collector. After the current collector was immersed in the cathode slurry for 5 minutes, the excess cathode slurry was removed from the surface of the current collector by using a spatula, and then the current collector was dried at 120°C for 1 hour.

Next, the dried current collector was compressed to the thickness of 400 µm by using a roll pressing machine (product name: 5-Ton Air Hydropress, manufactured by Thank Metal Co., Ltd.). Needles closely arranged in the pinholder shape were pressed against the surface of the compressed current collector, to make holes. The holes have the maximum diameter of 500 µm and have the depth of 8 µm. The holes' center-to-center distance was 2000 µm. The shape of the opening of the hole was a circle (round shape). The hole has the longitudinal sectional shape of a pentagon. Thus, the cathode having the active material density of 3.5 g/cm³ (that is, 69% relative to the true density) was prepared.

Next, a lithium metal was stamped out to obtain the counter electrode having the same size as the cathode prepared. The separator made of polyethylene having countless micropores was disposed between the cathode and the counter electrode. The separator, the cathode, and the counter electrode were put into an aluminum-laminated pack together with an electrolyte solution. The electrolyte solution is obtained by adding 1 M LiPF₆ into a solvent in which ethylene carbonate (EC), methyl ethyl carbonate (MEC), and dimethyl carbonate (DMC) are mixed at the volume ratio of 1 : 1 : 1. Then, the aluminum-laminated pack was vacuumed and thus a laminate cell was obtained. The laminate cell was used as the electrochemical cell of Example 1. The effective area of the electrode is 9 cm².

The electrochemical cells of Examples 2 to 5 were prepared in the same way as that of Example 1. Parameters of the holes formed in the cathodes of the electrochemical cells of Examples 2 to 5 are shown in Table 1. All the cathodes of Examples 2 to 5 have the same active material density as that of Example 1 and have holes with circular (round-shaped) openings.

**[Table 1]**

| | Example 1 | Example 2 | Example 3 | Example 4 | Example 5 | Comparative Example 1 |
|---|---|---|---|---|---|---|
| Maximum diameter of holes (µm) | 500 | 500 | 500 | 500 | 500 | - |
| Type of active material | LCO | LCO | LCO | LCO | LCO | LCO |
| Multiple of holes' center-to-center distance to maximum diameter of holes | 4 | 4 | 4 | 4 | 4 | - |
| Holes' center-to-center distance (µm) | 2000 | 2000 | 2000 | 2000 | 2000 | - |
| Depth of hole (µm) | 8 | 40 | 120 | 240 | 400 | 0 |
| Thickness of cathode (µm) | 400 | 400 | 400 | 400 | 400 | 400 |
| Ratio of depth of hole to thickness of cathode (%) | 5 | 10 | 30 | 60 | 100 | 0 |
| Longitudinal sectional shape of hole | Pentagon | Pentagon | Pentagon | Pentagon | Pentagon | - |
| Discharge capacity (%) | 35 | 43 | 52 | 77 | 100 | 30 |

In Examples 6 to 13, the cathodes for a lithium ion secondary battery were prepared. In each cathode, LNO was supported on the current collector. The cathode prepared was used in the electrochemical cell. The electrochemical cells of Examples 6 to 13 have the same configuration except for the maximum diameter of holes and the holes' center-to-center distance between the holes. A method for preparing the electrochemical cell of Example 6 will be described below by way of example.

Firstly, LNO, which was used as the active material, PVDF, which was used as the binder, and AB, which was used as the conduction assisting agent, were weighed so as to obtain the weight ratio of 98 : 1 : 1. Thereafter, the weighed PVDF was added to NMP, which was used as the solvent, and the resulting mixture was stirred for 20 minutes. Further, LNO and AB were added to the resulting mixture, and the mixture was stirred and the viscosity was adjusted to 5 Pa·s. Thus, the cathode slurry was obtained.

Next, the aluminum foam with the void ratio of 96% and the thickness of 600 µm was produced under the same conditions as those in Example 1, except that the foaming and drying temperature was changed to 60°C. The aluminum foam thus obtained was trimmed to the size of 3 x 3 cm to form a current collector. After the current collector was immersed in the cathode slurry for 5 minutes, the excess cathode slurry was removed from the surface of current collector by using a spatula. Then, the current collector was dried at 120°C for 1 hour.

Next, the dried current collector was compressed to the thickness of 500 µm by using a roll pressing machine. A laser processing machine (product name: ML605 GTF2, manufactured by Mitsubishi Electric Corp.) was used to irradiate the surface of the compressed current collector with a 5 µm-diameter laser beam. Thereby penetrating holes were formed in the surface of the compressed current collector. The penetrating holes had the maximum diameter of 5 µm and the holes' center-to-center distance of 20 µm. The shape of the opening of the penetrating hole was a quadrangle. The penetrating hole had a U-shaped longitudinal sectional shape. Thus, the cathode having the active material density of 3.3 g/cm³ (69% relative to the true density) was obtained.

By using the cathode thus prepared, the electrochemical cell of Example 6 was prepared in the same way as Example 1.

The electrochemical cells of Examples 7 to 9 were prepared in the same way as Example 6. The electrochemical cells of Examples 10 to 13 were prepared in the same way as Example 6, except that the cathode having the penetrating holes was prepared. The penetrating holes were formed by pressing the needles closely arranged in the pinholder shape against the surface of the current collector. Parameters of the holes formed in the cathodes of the electrochemical cells of Examples 7 to 13 are shown in Table 2. All the cathodes of Examples 7 to 13 have the same active material density as that of Example 6, and have holes with quadrangular-shaped openings.

**[Table 2]**

| | Example 6 | Example 7 | Example 8 | Example 9 | Example 10 | Example 11 | Example 12 | Example 13 |
|---|---|---|---|---|---|---|---|---|
| Maximum diameter of holes (µm) | 5 | 10 | 50 | 100 | 500 | 1000 | 2000 | 3000 |
| Type of active material | LiNiO₂ | LiNiO₂ | LiNiO₂ | LiNiO₂ | LiNiO₂ | LiNiO₂ | LiNiO₂ | LiNiO₂ |
| Multiple of holes' center-to-center distance to maximum diameter of holes | 4 | 4 | 4 | 4 | 4 | 4 | 4 | 4 |
| Holes' center-to-center | 20 | 40 | 200 | 400 | 2000 | 4000 | 8000 | 12000 |
| distance (µm) | | | | | | | | |
| Depth of hole (µm) | 500 | 500 | 500 | 500 | 500 | 500 | 500 | 500 |
| Thickness of cathode (µm) | 500 | 500 | 500 | 500 | 500 | 500 | 500 | 500 |
| Longitudinal sectional shape of hole | U-Shape | U-Shape | U-Shape | U-Shape | U-Shape | U-Shape | U-Shape | U-Shape |
| Discharge capacity (%) | 76 | 87 | 92 | 95 | 99 | 100 | 94 | 82 |

In Examples 14 to 19, the cathodes for a lithium ion secondary battery of the present invention were prepared. In each cathode, a ternary cathode material having the composition of L(Ni_{1/3}Mn_{1/3}Co_{1/3})O₂ was supported on the current collector. The cathode was used in the electrochemical cell. The electrochemical cells of Examples 14 to 19 have the same configuration except for the holes' center-to-center distances of the holes formed in the cathodes. A method for preparing the electrochemical cell of Example 14 will be described by way of example.

Firstly, each of the ternary cathode material, which was used as the active material, PVDF, which was used as the binder, and KB, which was used as the conduction assisting agent, was weighed so as to obtain the weight ratio of 96 : 2 : 2. Thereafter, the weighed PVDF was added to NMP, which was used as the solvent, and the resulting mixture was stirred for 20 minutes. Further, the ternary cathode material and KB were added to the resulting mixture, and the mixture was stirred and the viscosity was adjusted to 5 Pa·s. Thus, the cathode slurry was obtained.

Next, the aluminum foam with the void ratio of 85% and the thickness of 3600 µm was produced under the same conditions as those in Example 1, except that the foaming and drying temperature was changed to 60°C. The aluminum foam thus obtained was trimmed to the size of 3 x 3 cm to form a current collector. After the current collector was immersed in the cathode slurry for 15 minutes, the excess cathode slurry was removed from the surface of the current collector by using a spatula. Then, the current collector was dried at 120°C for 3 hours.

Next, the dried current collector was compressed to the thickness of 3000 µm by using a roll pressing machine. The needles closely arranged in the pinholder shape were pressed against the surface of the current collector, to make the holes having the maximum diameter of 500 µm, the depth of 2900 µm, the holes' center-to-center distance of 500 µm, hexagonal-shaped openings, and U-shaped longitudinal sectional shapes. Thus, the cathode having the active material density of 2.6 g/cm³ (56% relative to the true density) was prepared.

By using the cathode thus prepared, the electrochemical cell of Example 14 was prepared in the same way as Example 1.

The electrochemical cells of Examples 15 to 19 were prepared in the same way as Example 14. Parameters of the holes formed in the cathodes of the electrochemical cells of Examples 15 to 19 are shown in Table 3. All the cathodes of Examples 15 to 19 have the same active material density as Example 14 and have the holes with hexagonal-shaped openings.

**[Table 3]**

| | Example 14 | Example 15 | Example 16 | Example 17 | Example 18 | Example 19 |
|---|---|---|---|---|---|---|
| Maximum diameter of holes (µm) | 500 | 500 | 500 | 500 | 500 | 500 |
| Type of active material | Ternary cathode material | Ternary cathode material | Ternary cathode material | Ternary cathode material | Ternary cathode material | Ternary cathode material |
| Multiple of holes' center-to-center distance to maximum diameter of holes | 1 | 2 | 4 | 8 | 12 | 16 |
| Holes' center-to-center distance (µm) | 500 | 1000 | 2000 | 4000 | 6000 | 8000 |
| Depth of hole (µm) | 2900 | 2900 | 2900 | 2900 | 2900 | 2900 |
| Thickness of cathode (µm) | 3000 | 3000 | 3000 | 3000 | 3000 | 3000 |
| Longitudinal sectional shape of hole | U-Shape | U-Shape | U-Shape | U-Shape | U-Shape | U-Shape |
| Discharge capacity (%) | 49 | 85 | 100 | 93 | 88 | 71 |

In Examples 20 to 23, the cathodes for a lithium ion secondary battery of the present invention were prepared. In each cathode, LMO was supported on the current collector. The cathode was used in the lithium ion secondary battery. The electrochemical cells of Examples 20 to 23 have the same configuration except for the shapes of the openings of the holes formed in the cathode. A method for preparing the electrochemical cell of Example 20 will be described by way of example.

Firstly, each of LMO, which was used as the active material, PVDF, which was used as the binder, and AB, which was used as the conduction assisting agent, was weighed so as to obtain the weight ratio of 95 : 3 : 2. Thereafter, the weighed PVDF was added to NMP, which was used as the solvent, and the resulting mixture was stirred for 20 minutes. Further, LMO and AB were added to the resulting mixture, and the mixture was stirred and the viscosity was adjusted to 5 Pa·s. Thus, the cathode slurry was obtained.

Next, the aluminum foam with the void ratio of 70% and the thickness of 110 µm was formed under the same conditions as those in Example 1, except that the foaming and drying temperature was changed to 40°C. The aluminum foam thus obtained was trimmed to the size of 3 x 3 cm to form a current collector. After the current collector was immersed in the cathode slurry for 5 minutes, the excess cathode slurry was removed from the surface of the current collector by using a spatula. Then, the current collector was dried at 120°C for 1 hour.

Next, the dried current collector was compressed to the thickness of 102 µm by using a roll pressing machine. The needles closely arranged in the pinholder shape was pressed against the surface of the current collector, to make the holes having maximum diameter of 500 µm, the depth of 101 µm, the holes' center-to-center distance of 2000 µm, circular (round-shaped) openings, and triangular longitudinal sectional shapes. Thus, the cathode having the active material density of 2.1 g/cm³ (50% relative to the true density) was prepared.

By using the cathode thus prepared, the electrochemical cell of Example 20 was prepared in the same way as Example 1.

The electrochemical cells of Examples 21 to 23 were prepared in the same way as Example 20. Parameters of the holes formed in the cathodes of the electrochemical cells of Examples 21 to 23 are shown in Table 4. All the cathodes of Examples 21 to 23 have the same active material density as that of Example 20.

**[Table 4]**

| | Example 20 | Example 21 | Example 22 | Example 23 | Comparative Example 2 |
|---|---|---|---|---|---|
| Presence of hole | Yes | Yes | Yes | Yes | No |
| Type of active material | LiMn₂O₄ | LiMn₂O₄ | LiMn₂O₄ | LiMn₂O₄ | LiMn₂O₄ |
| Surface shape of hole | Circle | Triangle | Quadrangle | Hexagon | - |
| Longitudinal sectional shape of hole | Triangle | Triangle | Triangle | Triangle | - |
| Maximum diameter of holes (µm) | 500 | 500 | 500 | 500 | - |
| Multiple of holes' center-to-center distance to maximum diameter of holes | 8 | 8 | 8 | 8 | - |
| Holes' center-to-center distance (µm) | 2000 | 2000 | 2000 | 2000 | - |
| Depth of hole (µm) | 101 | 101 | 101 | 101 | 0 |
| Thickness of cathode (µm) | 102 | 102 | 102 | 102 | 102 |
| Ratio of depth of hole to thickness of cathode (%) | 99 | 99 | 99 | 99 | 0 |
| Discharge capacity (%) | 100 | 97 | 98 | 98 | 49 |

The average diameter of the micropores of the aluminum foam used in the present invention was approximately 150 µm. In this embodiment, the maximum diameter of the holes formed in the cathode, the holes' center-to-center distance, and the depth of the hole were measured with a laser microscope (product name: VK-X100, manufactured by Keyence Corp.). The values were measured at each of 30 sites, and the average value was calculated. The thickness of the cathode was measured by a micrometer after the hole was formed in the cathode, and will be discussed below.

The active material density is defined as follows: Active Material Density (g/cm³) = Weight (g) of Active Material in Cathode / Volume (cm³) of Cathode Containing Porous-Metal. The volume of the cathode containing porous-metal is obtained by the equation: Volume (cm³) of Cathode Containing Porous-Metal = a (Width: cm) x b (Depth: cm) x c (Height: cm), provided that the cathode is, for example, a rectangular parallelepiped with the width a, the depth b, and the height (thickness) c. The weight of the active material in the cathode is obtained by multiplying the weight of a mixed material portion, excluding the porous metal, in the cathode by the content rate of the active material in the cathode, namely, by the equation: Weight (g) of Active Material = Weight (g) of Mixed Material Portion x Content Rate of Active Material. The weight of the mixed material portion, excluding the porous metal, in the cathode is obtained by subtracting the weight of the porous metal from the weight of the cathode measured with an electronic balance, namely by the equation: Weight (g) of Mixed Material Portion Excluding Porous Metal = Total Weight (g) of Cathode - Weight (g) of Porous Metal. Hence, the active material density was obtained by dividing the calculated weight of the active material by the volume of the cathode containing porous metal.

The weight of the active material per unit area was calculated by dividing the weight of the active material by the area (9 cm² in the present Examples) of one surface of the cathode.

### (2) Method for evaluating characteristics of electrochemical cell

Characteristics of the electrochemical cell were evaluated by measuring the discharge capacity. The discharge capacity at the temperature of 25 ± 1°C was measured by using a charge/discharge testing apparatus (model: ACD-R1APS, manufactured by Aska Electronic Co., Ltd.).

Each of the electrochemical cells of Examples 1 to 23 was charged with the constant current (CC: constant current) of 5 mA/cm² and the constant voltage (CV: constant voltage) of 4.2 V vs. Li/Li⁺ until the charging current decreased to 0.1 mA/cm², and then discharged with the constant current of 10 mA/cm² and the cut-off voltage of 3.0 V vs. Li/Li⁺. The electric capacity obtained at the time of discharge is referred to as the discharge capacity.

The discharge capacities of the electrochemical cells of Examples 1 to 23 were compared by standardizing the discharge capacities relative to the largest discharge capacity, which is regarded as 100%, among the electrochemical cells to be compared.

### (3) Results of evaluation of electrochemical cells

### (3-1) Relationship between depth of holes of cathode and characteristics of electrochemical cell

Table 1 shows results of measurements (measurement results) of the discharge capacities of the electrochemical cells of Examples 1 to 5. For comparison purpose, an electrochemical cell of Comparative Example (Comparative Example may be abbreviated as C. Example in the following Tables) 1 was prepared. The electrochemical cell of Comparative Example 1 differs from the electrochemical cell of Example 1 only in that a cathode in the electrochemical cell of Comparative Example 1 does not have holes. A result of measurement of discharge capacity of Comparative Example 1 is also shown in Table 1. The discharge capacities in Table 1 are standardized by the largest value, i.e. the value of Example 5, which is regarded as 100%, among the discharge capacities. The discharge capacity of Example 5, in which LCO was used as the active material, was 142 mAh/g.

As shown in Table 1, the electrochemical cells of Examples 1 to 5 have higher discharge capacities as compared with the electrochemical cell of Comparative Example 1, so that it is confirmed that when the cathode for a lithium ion secondary battery of the present invention is used, the discharge capacity is enhanced. In addition, with the increase in the depth of the hole, the discharge capacity of the electrochemical cell is increased, and when the ratio of the depth of the hole relative to the thickness of the cathode is 5% or more, the discharge capacity is 35% or higher, and especially when the ratio of the depth of the hole is 60% or more, the discharge capacity is further increased to 77% or more. This is because with the increase in the depth of the hole, the lithium ion can migrate more readily in the thickness direction of the cathode, resulting in increase in the active material that can contribute to the cell reaction. As a consequence, it can be seen that the ratio of the depth of the hole relative to the thickness of the cathode is preferably 5% or more, more preferably 60% or more.

### (3-2) Relationship between maximum diameter of holes of cathode and characteristics of electrochemical cell

Table 2 shows the measurement results of the discharge capacities of the electrochemical cells of Examples 6 to 13. The electrochemical cells of Examples 6 to 13 have the same configuration except for the maximum diameter of the holes in the cathode and the holes' center-to-center distance. In the electrochemical cells of Examples 6 to 13, the holes' center-to-center distance is changed relative to the maximum diameter of the holes to make the total areas of the holes in the electrochemical cells approximately the same. The discharge capacities in Table 2 are standardized by the discharge capacity of Example 11, which is regarded as 100%. The discharge capacity of Example 11, in which LNO was used as the active material, was 185 mAh/g.

As can be seen in Table 2, in the electrochemical cells of Examples 6 to 13, when the maximum diameter of the holes is in the range of 5 to 3000 µm, the discharge capacity is 76% or more. When the maximum diameter of the holes is in the range of 50 to 2000 µm, the discharge capacity is further increased to 90% or more. As a consequence, it can be seen that the maximum diameter of the holes is preferably 5 to 3000 µm, and the maximum diameter of the holes is particularly preferably 50 to 2000 µm.

The discharge capacity of Example 11, in which the maximum diameter of the holes is 1000 µm, is the largest among those of Examples 6 to 13. It is considered that, in a case where the maximum diameter of the hole is less than 1000 µm, the lithium ion migrating in the electrolyte solution in the hole becomes more susceptible to the influence of the hole size as the maximum diameter decreases. As a consequence, the speed of the migration of the lithium ion in the electrolyte solution decreases, and thereby the value of the discharge capacity gradually decreases. Also it is considered that, in a case where the maximum diameter of the holes is more than 1000 µm, the possibility of collapsing of the skeleton of the porous metal upon forming the holes in the cathode increases as the maximum diameter increases, and thereby the value of the discharge capacity gradually decreases.

### (3-3) Relationship between holes' center-to-center distance in cathode and characteristics of electrochemical cell

Table 3 shows measurement results of the discharge capacities of the electrochemical cells of Examples 14 to 19. The lithium ion secondary batteries of Examples 14 to 19 have the same configuration except for the center-to-center distance of the holes formed in the cathode. The discharge capacities in Table 3 are standardized by the value of the discharge capacity of Example 16, which is regarded as 100%. The discharge capacity of Example 16, in which the ternary cathode material was used as the active material, was 107 mAh/g.

As shown in Table 3, in the electrochemical cells of Examples 14 to 19, when the holes' center-to-center distance is in the range of 500 to 8000 µm, the discharge capacity is 49% or more. In particular, when the holes' center-to-center distance is in the range of 1000 to 6000 µm, the discharge capacity is further increased to 85% or more. Hence, it can be seen that the holes' center-to-center distance is preferably in the range of 500 to 8000 µm, and the holes' center-to-center distance is particularly preferably in the range of 1000 to 6000 µm.

### (3-4) Relationship between shape of openings of the holes in cathode and characteristics of electrochemical cell

Table 4 shows measurement results of the discharge capacities of the electrochemical cells of Examples 20 to 23. The electrochemical cells of Examples 20 to 23 have the same configuration except for the shape of the openings of the holes. For comparison purpose, the electrochemical cell of Comparative Example 2 was prepared. The electrochemical cell of Comparative Example 2 has the same configuration as that of Example 20 except that the cathode of Comparative Example 2 does not have holes. Table 4 includes the measurement result of the discharge capacity of the electrochemical cell of Comparative Example 2. The discharge capacities in Table 4 are standardized by the value of the discharge capacity of Example 20, which is regarded as 100%. The discharge capacity of Example 20, in which LMO was used as the active material, was 107 mAh/g.

As shown in Table 4, each of the discharge capacities of the electrochemical cells of Examples 20 to 23 is 97% or more, which is higher than that of the electrochemical cell of Comparative Example 2. Therefore, the discharge capacity increases regardless of the shape of the openings of the holes formed in the cathode. Table 4 shows the results obtained by using the electrodes having the thickness of 102 µm, which is relatively thin among the electrodes of the present invention. It is considered that the reason for relatively high discharge capacity of 49% in Comparative Example 2, as compared with the discharge capacity of Example 20, is due to the thin cathode. The lithium ion can readily migrate throughout the entire cathode even in the absence of the holes. The discharge capacity of Comparative Example 1 is 35%, which is relatively low as compared with that of Example 5. It is considered that because the thickness of the cathode is as thick as 400 µm, migration of the lithium ion throughout the entire cathode is difficult in the absence of the holes. Hence, the discharge capacity decreases significantly in Comparative Example 1.

### (3-5) Relationship between types of active material and characteristics of electrochemical cell

In order to evaluate changes in characteristics of the electrochemical cells using different active materials, electrochemical cells were prepared under the same conditions as those in Example 5 except that LiNiO₂ (true density: 4.8 g/cm³), LiNi_{0.8}Co_{0.15}Al_{0.05}O₂ (true density: 4.9 g/cm³), and LiFePO₄ (true density: 3.5 g/cm³), were respectively used as the active materials, and the respective discharge capacities were measured. The active material density of each of the cathodes used in the electrochemical cells is 70% relative to the true density of the active material. For comparison purpose, electrochemical cells with the same configuration as those of the above electrochemical cells but without holes were prepared, and the discharge capacities were measured. These results are shown in Table 5. Each of the values of the discharge capacities of the electrochemical cells without holes is standardized by the discharge capacity, which is regarded as 100%, of the corresponding electrochemical cell formed with the holes. The discharge capacities were measured at 1C discharge.

**[Table 5]**

| | Discharge capacity (%) | |
|---|---|---|
| Type of active material | With hole | Without hole |
| LiNiO₂ | 100 | 37 |
| LiNi_{0.8}Co_{0.15}Al_{0.05}O₂ | 100 | 34 |
| LiFePO₄ | 100 | 15 |

As shown in Table 5, it was confirmed that in the present invention, the discharge capacity is increased by forming the holes in the cathode, regardless of the type of the active material used. The discharge capacity of the electrochemical cell using the active material LiNiO₂ and formed with the holes was 180 mAh/g. The discharge capacity of the electrochemical cell using the active material LiNi_{0.8}Co_{0.15}Al_{0.05}O₂ and formed with the holes was 160 mAh/g. The discharge capacity of the electrochemical cell using the active material LiFePO₄ and formed with the holes was 135 mAh/g. The average particle diameter of LiNiO₂ and the average particle diameter of LiNi_{0.8}Co_{0.15}Al_{0.05}O₂ are large, i.e., approximately 10 µm. On the other hand, the average particle diameter of LiFePO₄ is 1 µm or less. Therefore, it is presumed that there are not so many micropores in the cathode in the electrochemical cell using LiFePO₄, and hence, in the absence of the holes, the lithium ion cannot smoothly migrate, resulting in significant decrease in the discharge capacity.

### (Example II)

In order to examine the relationship between the active material density of the cathode and the discharge capacity of the electrochemical cell, in Examples 24 to 54, the cathodes of the present invention with the active material density varied within the range of 50 to 80% relative to the true density were prepared. With the use of the cathodes, the electrochemical cells were prepared in a manner similar to the above. All the holes formed in the cathode had the same size and the same shape: the shape of the opening of the penetrating hole was a circle (round shape); the longitudinal sectional shape was a pentagon, the holes' center-to-center distance was 4000 µm; and the maximum diameter of the holes was 500 µm. The hole penetrates a vertex portion of the pentagonal sectional shape. For comparison purpose, in Comparative Examples 3 to 31, the cathodes having the active material density of 45% or 85% relative to the true density and formed with the above-described holes and the cathodes having the same active material densities as the prepared cathodes but not formed with the holes were prepared, and the electrochemical cells using the cathodes were prepared. The electrochemical cells were prepared by the same method as Example 1.

Firstly, the discharge capacities of the electrochemical cells of Examples 24 to 30 and Comparative Examples 3 to 13 with the cathodes shown in Table 6, were measured, and the relationship between the active material density and the characteristics of the electrochemical cell was evaluated. The discharge capacity was measured as follows. The charging was carried out with the constant current of 1 mA/cm² and the constant voltage of 4.2 V vs. Li/Li⁺ until the charging current value decreased to 0.1 mA/cm², and then, the discharging was carried out with the cut-off voltage of 3.0 V vs. Li/Li⁺ under two discharge conditions, i.e., the 1C discharge and the 0.2C discharge. The measurement results of the discharge capacities are shown in Table 6 as well. The mass per area shown in the table represents the content of the active material per unit area.

**[Table 6]**

| | Type of active material | Ratio of active material density to true density (%) | Active material density (g/cm³) | Thickness of cathode (µm) | Active material content per area (mg/cm²) | Theoretical discharge capacity of active material per area (mAh/cm²) | Presence of hole | Discharge condition: 1C | | | Discharge condition: 0.2C | | |
|---|---|---|---|---|---|---|---|---|---|---|---|---|---|
| | | | | | | | | Charging current (mA/cm²) | Discharge capacity per mass (mAh/g) | Discharge capacity per area (mAh/cm²) | Charging current (mA/cm²) | Discharge capacity per mass (mAh/g) | Discharge capacity per area (mAh/cm²) |
| Example 24 | LiCoO₂ | 50 | 2.53 | 300 | 76 | 11.4 | Yes | 1 | 145 | 10.9 | 1 | 145 | 11.0 |
| Example 25 | LicoO₂ | 55 | 2.78 | 300 | 83 | 12.5 | Yes | 1 | 144 | 12.0 | 1 | 145 | 12.1 |
| Example 26 | LiCoO₂ | 60 | 3.03 | 300 | 91 | 13.7 | Yes | 1 | 139 | 12.6 | 1 | 145 | 13.1 |
| Example 27 | LiCoO₂ | 65 | 3.28 | 300 | 98 | 14.7 | Yes | 1 | 133 | 13.1 | 1 | 145 | 14.3 |
| Example 28 | LiCoO₂ | 70 | 3.54 | 300 | 106 | 15.9 | Yes | 1 | 128 | 13.5 | 1 | 145 | 15.4 |
| Example 29 | LiCoO₂ | 75 | 3.79 | 300 | 114 | 17.1 | Yes | 1 | 120 | 13.6 | 1 | 145 | 16.5 |
| Example 30 | LiCoO₂ | 80 | 4.04 | 300 | 121 | 18.2 | Yes | 1 | 109 | 13.2 | 1 | 141 | 17.1 |
| C. Example 3 | LiCoO₂ | 45 | 2.27 | 300 | 68 | 10.2 | Yes | 1 | 145 | 9.9 | 1 | 145 | 9.9 |
| C. Example 4 | LiCoO₂ | 85 | 4.29 | 300 | 129 | 19.4 | Yes | 1 | 79 | 10.2 | 1 | 133 | 17.1 |
| C. Example 5 | LiCoO₂ | 45 | 2.27 | 300 | 68 | 10.2 | No | 1 | 145 | 9.9 | 1 | 145 | 9.9 |
| C. Example 6 | LiCoO₂ | 50 | 2.52 | 300 | 76 | 11.4 | No | 1 | 142 | 10.7 | 1 | 145 | 11.0 |
| C. Example 7 | LiCoO₂ | 55 | 2.78 | 300 | 83 | 12.5 | No | 1 | 133 | 11.1 | 1 | 145 | 12.1 |
| C. Example 8 | LiCoO₂ | 60 | 3.03 | 300 | 91 | 13.7 | No | 1 | 120 | 10.9 | 1 | 142 | 12.9 |
| C. Example 9 | LiCoO₂ | 65 | 3.28 | 300 | 98 | 14.7 | No | 1 | 102 | 10.0 | 1 | 138 | 13.6 |
| C. Example 10 | LiCoO₂ | 70 | 3.54 | 300 | 106 | 15.9 | No | 1 | 85 | 9.0 | 1 | 131 | 13.9 |
| C. Example 11 | LiCoO₂ | 75 | 3.79 | 300 | 114 | 17.1 | No | 1 | 76 | 8.6 | 1 | 122 | 13.9 |
| C. Example 12 | LiCoO₂ | 80 | 4.04 | 300 | 121 | 18.2 | No | 1 | 68 | 8.2 | 1 | 107 | 13.0 |
| C. Example 13 | LiCoO₂ | 85 | 4.29 | 300 | 129 | 19.4 | No | 1 | 52 | 6.7 | 1 | 94 | 12.1 |

Firstly, the measurement results of the discharge capacities under the 1C discharge condition were described. In the electrochemical cells of Examples 24 to 30, both the discharge capacity per mass and the discharge capacity per area in the 1C discharge are higher than those of Comparative Examples 6 to 12, in which the cathode has the same active material density but not formed with the holes. Thus, it can be seen that the discharge capacity was increased by forming the holes.

In the cathodes of Comparative Examples 6 to 12, because of the high active material density, the voids present in the cathode are not so many that the electrolyte solution cannot readily enter the cathode. Therefore, in the electrochemical cells using the cathodes, the active material that is present in the position deep in the thickness direction from the surface of the cathode cannot be effectively utilized, so that there is little active material that contributes to the cell reaction. Hence, the discharge capacity value is low. On the other hand, the cathodes of Examples 24 to 30 are considered as follows. The lithium ion preferentially passes through the electrolyte solution that is present in the holes, so that the active material that is present in the position deep in the thickness direction from the surface of the cathode can be effectively utilized. Therefore, the amount of the active material contributable to the cell reaction is so large that the discharge capacity is higher than those of the electrochemical cells of Comparative Examples having the same active material density.

The electrochemical cell of Comparative Example 3 and the electrochemical cell of Comparative Example 5 have the same discharge capacity per mass and the same discharge capacity per area. The electrochemical cell of Comparative Example 3 includes the cathode with the low active material density of 45% relative to the true density and with the holes. The electrochemical cell of Comparative Example 5 includes the cathode with the same active material density but without the holes. It can be seen that when the active material density is 45% relative to the true density, the discharge capacity is not increased even when the holes are formed in the cathode. In the case that the active material density is 45% relative to the true density, because many voids are present in the cathode, there is a sufficient amount of the electrolyte solution in the cathode, so that the lithium ion can migrate inside the cathode, and thus, a large amount of active material can be effectively utilized. Because of this, it is considered that even when the holes are formed in the cathode, the active material that can be effectively utilized does not increase, and therefore, the discharge capacity does not increase.

When comparison is made between Example 30, in which the active material density is 80% relative to the true density, and Comparative Example 4, in which the active material density is 85% relative to the true density, the discharge capacity per mass is significantly decreased, and in addition, the discharge capacity per area is decreased. In the cathode of Comparative Example 4, the active material density is very high, so that the number and the size of the voids present in the cathode are small. Therefore, in the cathode of Comparative Example 4, it is considered that the amount of the electrolyte solution that is present inside the cathode is so little and the voids that are present among the active materials are so small that the migration resistance of the lithium ion becomes very high. Therefore, even when the holes are formed in the cathode, only the active material exposed to the inner space of the holes can be utilized, and the active material inside the cathode cannot be effectively utilized. Hence, the discharge capacity value decreases. Therefore, when the active material density is more than 80%, even when the supported amount of the active material is increased, the discharge capacity per mass decreases drastically, and the discharge capacity per area does not increase. As a consequence, the capacity of the battery does not increase.

Next, the measurement results of the discharge capacity under the 0.2C discharge condition will be described. In the 0.2C discharge, the discharge capacity per mass is 145 mAh/g in Examples 24 to 29, and is 141 mAh/g in Example 30. The values are high and close to the value of the theoretical discharge capacity. Because of the small discharging current, the time for discharge is increased by a factor of 5 as compared with the 1C discharge. And therefore, it is considered that the lithium ion is sufficiently diffused to the position deep inside the cathode, so that the amount of the active material contributable to the cell reaction is increased.

The discharge capacities per mass and the discharge capacities per area of the electrochemical cells of Examples 24 and 25 are the same as those of the electrochemical cells of Comparative Examples of 6 and 7. The discharge capacities per mass and the discharge capacities per area of the electrochemical cells of Examples 26 to 30 are larger than those of the electrochemical cells of Comparative Examples 8 to 12. However, the differences between them are smaller than the differences between the measurement results of the 1C discharge. Because the amount of the current of the 1C discharge is 5 times larger than that of the 0.2C discharge, the difference between the internal resistances of the electrochemical cells significantly affects and results in the large difference between the values of the measured discharge capacities. Therefore, it is considered that the difference in the discharge capacities between the Examples and the Comparative Examples were small in the 0.2 discharge. In the electrochemical cells of the Examples, when the discharge is performed at the 1C discharge, the values of the discharge capacities are larger than those of the electrochemical cells of the Comparative Examples without the holes. Accordingly, the cathode of the present invention can provide a large discharge capacity when it is used in the lithium ion secondary battery under the discharge condition of a high current (high output).

As a consequence, it was confirmed that in the cathode of the present invention, the active material density is preferably 50 to 80% relative to the true density of the active material.

In both the 1C discharge and the 0.2C discharge, the discharge capacities per area of the electrochemical cells of Examples 28 to 30 are especially high.

By changing the active material from LCO to the ternary cathode material, LMO, LNO, NCA, LFP, or LCO (50%) + ternary cathode material (50%), the discharge capacities of the electrochemical cells of Examples 31 to 54, in which the cathodes shown in Table 7 were used, were measured, and the relationship between the active material density and the characteristics of the electrochemical cell was evaluated.

**[Table 7]**

| | Type of active material | Ratio of active material density to true density (%) | Active material density (g/cm³) | Thickness of cathode (µm) | Active material content per area (mg/cm²) | Theoretical discharge capacity of active material per area (mAh/cm²) | Presence of hole | Charging current (mA/cm²) | Discharging current (mA/cm²) | Discharge capacity per mass (mAh/g) | Discharge capacity per area (mAh/cm²) |
|---|---|---|---|---|---|---|---|---|---|---|---|
| Example 31 | Ternary cathode | 50 | 2.30 | 1000 | 230 | 34.5 | Yes | 2 | 10 | 139 | 32.0 |
| Example 32 | Ternary cathode | 60 | 2.76 | 1000 | 280 | 42 | Yes | 2 | 10 | 133 | 36.3 |
| Example 33 | Ternary cathode | 70 | 3.22 | 1000 | 320 | 48 | Yes | 2 | 10 | 130 | 41.9 |
| Example 34 | Ternary cathode | 80 | 3.68 | 1000 | 370 | 55.5 | Yes | 2 | 10 | 124 | 45.6 |
| Example 35 | LiMn₂O₄ | 50 | 2.10 | 500 | 105 | 11.6 | Yes | 1 | 10 | 110 | 11.6 |
| Example 36 | LiMn₂O₄ | 60 | 2.52 | 500 | 126 | 13.9 | Yes | 1 | 10 | 108 | 13.6 |
| Example 37 | LiMn₂O₄ | 70 | 2.94 | 500 | 147 | 16.2 | Yes | 1 | 10 | 104 | 15.3 |
| Example 38 | LiMn₂O₄ | 80 | 3.36 | 500 | 168 | 18.5 | Yes | 1 | 10 | 96 | 14.1 |
| Example 39 | LiNiO₂ | 50 | 2.40 | 100 | 24 | 4.44 | Yes | 1 | 10 | 185 | 4.44 |
| Example 40 | LiNiO₂ | 60 | 2.88 | 100 | 28.8 | 5.33 | Yes | 1 | 10 | 185 | 5.33 |
| Example 41 | LiNiO₂ | 70 | 3.36 | 100 | 33.6 | 6.21 | Yes | 1 | 10 | 179 | 6.01 |
| Example 42 | LiNiO₂ | 80 | 3.84 | 100 | 38.4 | 7.1 | Yes | 1 | 10 | 162 | 6.22 |
| Example 43 | NI_{0.8}Co_{0.15}Al_{0.05}O | 50 | 2.45 | 300 | 73.5 | 12.3 | Yes | 2 | 10 | 168 | 12.3 |
| Example 44 | NI_{0.8}Co_{0.15}Al_{0.05}O | 60 | 2.94 | 300 | 88.2 | 14.8 | Yes | 2 | 10 | 162 | 14.2 |
| Example 45 | NI_{0.8}Co_{0.15}Al_{0.05}O | 70 | 3.43 | 300 | 103 | 17.3 | Yes | 2 | 10 | 153 | 15.8 |
| Example 46 | NI_{0.8}Co_{0.15}Al_{0.05}O | 80 | 3.92 | 300 | 118 | 19.8 | Yes | 2 | 10 | 141 | 16.6 |
| Example47 | LiFePO₄ | 50 | 1.75 | 150 | 26 | 3.8 | Yes | 1 | 5 | 145 | 3.8 |
| Example 48 | LiFePO₄ | 60 | 2.10 | 150 | 32 | 4.6 | Yes | 1 | 5 | 145 | 4.6 |
| Example 49 | LiFePO₄ | 70 | 2.45 | 150 | 37 | 5.4 | Yes | 1 | 5 | 137 | 5.1 |
| Example 50 | LiFePO₄ | 80 | 2.80 | 150 | 42 | 6.1 | Yes | 1 | 5 | 110 | 4.6 |
| Example 51 | LiCoO₂ (50%) + Ternary cathode (50%) | 50 | 2.42 | 2000 | 480 | 72 | Yes | 2 | 10 | 108 | 51.8 |
| Example 52 | LiCoO₂ (50%) + Ternary cathode (50%) | 60 | 2.90 | 2000 | 580 | 87 | Yes | 2 | 10 | 101 | 58.6 |
| Example 53 | LiCoO₂ (50%) + Ternary cathode (50%) | 70 | 3.38 | 2000 | 680 | 102 | Yes | 2 | 10 | 89 | 60.5 |
| Example 54 | LiCoO₂ (50%) + Ternary cathode (50%) | 80 | 3.86 | 2000 | 770 | 116 | Yes | 2 | 10 | 80 | 61.6 |

For comparison purpose, the discharge capacities of the electrochemical cells of Comparative Examples 14 to 31, in which the cathodes shown in Table 8 were used, were measured.

**[Table 8]**

| | Type of active material | Ratio of active material density to true density (%) | Active material density (g/cm³) | Thickness of cathode (µm) | Active material content per area (mg/cm²) | Theoretical discharge capacity of active material per area (mAh/cm²) | Presence of hole | Charging current (mA/cm²) | Discharging current (mA/cm²) | Discharge capacity per mass (mAh/g) | Discharge capacity per area (mAh/cm²) |
|---|---|---|---|---|---|---|---|---|---|---|---|
| C. Example 14 | Ternary cathode | 45 | 2.07 | 1000 | 210 | 31.5 | Yes | 2 | 10 | 142 | 29.3 |
| C. Example 15 | Ternary cathode | 85 | 3.91 | 1000 | 390 | 58.5 | Yes | 2 | 10 | 91 | 35.4 |
| C. Example 16 | Ternary cathode | 60 | 2.76 | 1000 | 280 | 42 | No | 2 | 10 | 52 | 14.3 |
| C. Example 17 | LiMn₂O₄ | 45 | 1.89 | 500 | 94 | 10.3 | Yes | 1 | 10 | 110 | 10.3 |
| C. Example 18 | LiMn₂O₄ | 85 | 3.57 | 500 | 178 | 19.6 | Yes | 1 | 10 | 64 | 11.4 |
| C. Example 19 | LiMn₂O₄ | 70 | 2.94 | 500 | 147 | 16.2 | No | 1 | 10 | 67 | 9.8 |
| C. Example 20 | LiNiO₂ | 45 | 2.16 | 100 | 21.6 | 4.0 | Yes | 1 | 10 | 185 | 4.0 |
| C. Example 21 | LiNiO₂ | 85 | 4.08 | 100 | 40.8 | 7.55 | Yes | 1 | 10 | 140 | 5.71 |
| C. Example 22 | LiNiO₂ | 80 | 3.84 | 100 | 38.4 | 7.1 | No | 1 | 10 | 118 | 4.53 |
| C. Example 23 | Ni_{0.8}Co_{0.15}Al_{0.05}O₂ | 45 | 2.21 | 300 | 66.3 | 11.1 | Yes | 2 | 10 | 168 | 11.1 |
| C. Example 24 | Ni_{0.8}Co_{0.15}Al_{0.05}O₂ | 85 | 4.17 | 300 | 125 | 21 | Yes | 2 | 10 | 96 | 12.0 |
| C. Example 25 | Ni_{0.8}Co_{0.15}Al_{0.05}O₂ | 50 | 2.45 | 300 | 73.5 | 12.3 | No | 2 | 10 | 102 | 7.5 |
| C. Example 26 | LiFePO₄ | 45 | 1.58 | 150 | 24 | 3.5 | Yes | 1 | 5 | 145 | 3.5 |
| C. Example 27 | LiFePO₄ | 85 | 2.98 | 150 | 45 | 6.5 | Yes | 1 | 5 | 65 | 2.9 |
| C. Example 28 | LiFePO₄ | 60 | 2.10 | 150 | 32 | 4.6 | No | 1 | 5 | 83 | 2.7 |
| C. Example 29 | LiCoO₂ (50%) + Ternary cathode (50%) | 45 | 2.17 | 2000 | 430 | 64.5 | Yes | 2 | 10 | 108 | 46.4 |
| C. Example 30 | LiCoO₂ (50%) Ternary cathode (50%) | 85 | 4.10 | 2000 | 820 | 123 | Yes | 2 | 10 | 44 | 36.1 |
| C. Example 31 | LiCoO₂ (50%) Ternary cathode (50%) | 60 | 2.90 | 2000 | 580 | 87 | No | 2 | 10 | 37 | 21.5 |

The value of the discharge capacity was measured as follows. The charging was carried out with the charging current shown in Table 7 and Table 8 and with the charging voltage shown below, until the charging current decreases to 0.1 mA/cm². Then, the discharging was carried out with the cut-off voltage of 3.0 V vs. Li/Li⁺ and with the discharging current shown in Table 7 and Table 8. The discharge condition was the 1C discharge. The charging voltage was 4.2 V vs. Li/Li⁺ for the ternary cathode material, LMO, and LCO (50%) + ternary cathode material (50%), 4.4 V vs. Li/Li⁺ for LNO, 4.35 V vs. Li/Li⁺ for NCA, and 3.7 V vs. Li/Li⁺ for LFP.

In order to confirm the effect of the holes, comparison is made for the cathodes having the same active material density while with the holes and without the holes, namely, the comparisons are made between Example 32 and Comparative Example 16, between Example 37 and Comparative Example 19, between Example 42 and Comparative Example 22, between Example 43 and Comparative Example 25, between Example 48 and Comparative Example 28, and between Example 52 and Comparative Example 31. In each case, the electrochemical cell of the Example has higher values both in the discharge capacity per mass and the discharge capacity per area than those of the electrochemical cell of the Comparative Example.

The comparison is made between Examples 34, 38, 42, 46, 50, and 51, in which the active material density is 80%, and Comparative Examples 15, 18, 21, 24, 27, and 30, in which the active material density is 85%. As a result of increase in the active material density from 80% to 85%, the discharge capacity per mass is drastically decreased and the discharge capacity per area is decreased in each active material.

### (Example III)

In order to examine the relationship between the thickness of the cathode and the discharge capacity of the electrochemical cell, in Examples 55 to 59, the cathodes of the present invention were prepared. The cathodes vary in thickness in a range of from 100 to 3000 µm. The electrochemical cells were prepared by using the cathodes. All the holes formed in the cathodes had the same size and the same shape: the penetrating holes each having an opening with the shape of a star with 4 points and having U-shaped longitudinal sectional shape, and having the holes' center-to-center distance of 2000 µm and the maximum diameter of 500 µm. The holes are open in the peak portion of the U-shaped sectional shape. For comparison purpose, in Comparative Examples 32 to 36, the cathodes the same as those of Examples 55 to 59, except that the holes were not formed, were prepared and the electrochemical cells were prepared by using the cathodes. The electrochemical cells were prepared in the same way as Example 1. The discharge capacities of these electrochemical cells were measured as follows. The electrochemical cell was charged with the constant current of 5 mA/cm² and the constant voltage of 4.2 V vs. Li/Li⁺ until the charging current decreased to 0.1 mA/cm², and then discharged with the cut-off voltage of 3.0 V vs. Li/Li⁺ and the constant current of 10 mA/cm². The discharge condition was the 1C discharge. The parameters and the measured values of the discharge capacities of the cathodes of Examples and Comparative Examples thus prepared are shown in Table 9. The composition of the ternary cathode material was Li(Ni_{1/3}Mn_{1/3}Co_{1/3})O₂.

**[Table 9]**

| | Type of active material | Ratio of active material density to true density (%) | Active material density (g/cm³) | Thickness of cathode (µm) | Active material content per area (mg/cm²) | Theoretical discharge capacity of active material per area (mAh/cm²) | Presence of hole | Charging current (mA/cm²) | Discharging current (mA/cm²) | Discharge capacity per mass (mAh/g) | Discharge capacity per area (mAh/cm²) | Ratio of discharge capacity to theoretical capacity (%) |
|---|---|---|---|---|---|---|---|---|---|---|---|---|
| Example 55 | Ternary cathode | 70 | 3.22 | 100 | 32 | 4.8 | Yes | 5 | 10 | 145 | 4.6 | 97 |
| Example 56 | Ternary cathode | 70 | 3.22 | 500 | 160 | 2.4 | Yes | 5 | 10 | 124 | 19.8 | 83 |
| Example 57 | Ternary cathode | 70 | 3.22 | 1000 | 320 | 48 | Yes | 5 | 10 | 119 | 38.1 | 79 |
| Example 58 | Ternary cathode | 70 | 3.22 | 2000 | 640 | 96 | Yes | 5 | 10 | 112 | 71.7 | 75 |
| Example 59 | Ternary cathode | 70 | 3.22 | 3000 | 970 | 145 | Yes | 5 | 10 | 105 | 101.0 | 70 |
| C. Example 32 | Ternary cathode | 70 | 3.22 | 100 | 32 | 4.8 | No | 5 | 10 | 140 | 4.5 | 93 |
| C. Example 33 | Ternary cathode | 70 | 3.22 | 500 | 160 | 24 | No | 5 | 10 | 87 | 13.9 | 58 |
| C. Example 34 | Ternary cathode | 70 | 3.22 | 1000 | 320 | 48 | No | 5 | 10 | 51 | 16.3 | 34 |
| C. Example 35 | Ternary cathode | 70 | 3.22 | 2000 | 640 | 96 | No | 5 | 10 | 26 | 16.6 | 17 |
| C. Example 36 | Ternary cathode | 70 | 3.22 | 3000 | 970 | 145 | No | 5 | 10 | 17 | 16.5 | 11 |

In the electrochemical cells of Examples 55 to 59, both the discharge capacity per mass and the discharge capacity per area are higher than those of respective electrochemical cells of Comparative Examples 32 to 36. The cathodes of Comparative Examples have the same thickness as those of Examples but the cathodes of Comparative Examples are not formed with holes. Thus, it can be seen that the discharge capacities are increased by forming the holes.

The amount of the increase in the discharge capacity becomes larger as the thickness of the cathode is increased. When the cathode is thick and not formed with the holes, the lithium ion migrates for a long distance in the voids of the cathode, so that the migration resistance of the lithium ion is high. In addition, it is considered that because the electrochemical cell using the cathode is so thick that the active material in the position deep in the thickness direction from the surface of the cathode cannot be effectively utilized. Hence, the discharge capacity is significantly low. It is considered that, in a case where the holes are formed in the cathode of such an electrochemical cell, the lithium ion preferentially passes through the electrolyte solution that is present in the holes so that the lithium ion can migrate smoothly. Hence, the migration resistance is reduced, and in addition, the active material in the position deep in the thickness direction from the surface of the cathode can be effectively utilized. Therefore the discharge capacity is high.

Both the discharge capacity per mass and the discharge capacity per area of the electrochemical cell of Example 55 are not so high, as compared with those of the electrochemical cell of Comparative Example 32, in which the cathode has the same thickness as that of Example 55, but not formed with holes. In the case of the relatively thin cathode, for example, with the thickness of 100 µm, the amount of the increase in the discharge capacity due to the holes formed in the cathode is small. When the cathode is thin, the lithium ion in the electrolyte solution can readily reach the active material that is present inside the current collector, and even when the holes are not formed, a large amount of the active material can be effectively utilized. Therefore, in the case of a thin cathode, even when the holes are formed in the cathode, it is considered that the amount of the increase in the active material that can be effectively utilized is so small that the increase in the discharge capacity is also small. On the contrary, in the electrochemical cell of Example 56, in which the cathode having the thickness of 500 µm is used, the discharge capacity per mass is increased by approximately 1.4 folds by forming the holes.

### [Reference Numerals]

- 1: lithium ion secondary battery
- 2: cathode for lithium ion secondary battery
- 3: anode
- 4: separator
- 5, 8: current collector
- 6: hole
- 7: bottom portion

## Claims

1. A cathode for a lithium ion secondary battery comprising:
a current collector; and
an active material supported on the current collector,
wherein the current collector includes a porous metal, and
the cathode includes a plurality of holes formed in a surface of the cathode, and an active material density of the cathode is 50 to 80% relative to a true density of the active material.

2. The cathode for a lithium ion secondary battery according to claim 1, wherein the cathode has a thickness of 100 to 3000 µm.

3. The cathode for a lithium ion secondary battery according to claim 1 or 2, wherein the cathode includes 69.0 to 98.9% by weight of LiCoO₂ as the active material and 1.0 to 25.0% by weight of the porous metal, and the active material density is 2.53 to 4.04 g/cm³.

4. The cathode for a lithium ion secondary battery according to claim 1 or 2, wherein the cathode includes 69.0 to 98.9% by weight of Li(NiₓMn_{y}Co_{z})O₂ as the active material and 1.0 to 25.0% by weight of the porous metal and the active material density is 2.30 to 3.68 g/cm³, provided that 0<x<1.0, 0<y<1.0, 0<z<1.0, and x+y+z=1.0.

5. The cathode for a lithium ion secondary battery according to claim 1 or 2, wherein the cathode includes 69.0 to 98.9% by weight of LiMn₂O₄ as the active material and 1.0 to 25.0% by weight of the porous metal, and the active material density is 2.10 to 3.36 g/cm³.

6. The cathode for a lithium ion secondary battery according to claim 1 or 2, wherein the cathode includes 69.0 to 98.9% by weight of LiNiO₂ as the active material and 1.0 to 25.0% by weight of the porous metal, and the active material density is 2.40 to 3.84 g/cm³.

7. The cathode for a lithium ion secondary battery according to claim 1 or 2, wherein the cathode includes 69.0 to 98.9% by weight of LiNi_{0.8}Co_{0.15}Al_{0.05}O₂ as the active material and 1.0 to 25.0% by weight of the porous metal, and the active material density is 2.45 to 3.92 g/cm³.

8. The cathode for a lithium ion secondary battery according to claim 1 or 2, wherein the cathode includes 69.0 to 98.9% by weight of LiFePO₄ as the active material and 1.0 to 25.0% by weight of the porous metal, and the active material density is 1.75 to 2.80 g/cm³.

9. The cathode for a lithium ion secondary battery according to claim 1 or 2, wherein the cathode includes 69.0 to 98.9% by weight of the active material and 1.0 to 25.0% by weight of the porous metal, the active material being two or more selected from LiCoO₂, Li(NiₓMn_{y}Co_{z})O₂, LiMn₂O₄, LiNiO₂ LiNi_{0.8}Co_{0.15}Al_{0.0}O₂, and LiFePO₄, and the active material density is in a range of more than 1.75 g/cm³ to less than 4.04 g/cm³, provided that 0<x<1.0, 0<y<1.0, 0<z<1.0, and x+y+z=1.0.

10. The cathode for a lithium ion secondary battery according to any one of claims 1 to 9, wherein a maximum diameter of the holes is 5 to 3000 µm.

11. The cathode for a lithium ion secondary battery according to any one of claims 1 to 10, wherein a distance between centers of the holes is 500 to 8000 µm.

12. The cathode for a lithium ion secondary battery according to any one of claims 1 to claim 11, wherein openings of the holes have at least one shape selected from a circle, a triangle, a quadrangle, a pentagon, and a polygon with the number of vertices greater than 5.

13. The cathode for a lithium ion secondary battery according to any one of claims 1 to 12, wherein the holes include bottom portions.

14. The cathode for a lithium ion secondary battery according to any one of claims 1 to 13, wherein a depth of the holes is 5% or more relative to a thickness of the cathode.

15. A lithium ion secondary battery comprising the cathode for the lithium ion secondary battery according to any one of claims 1 to 14.
